(19) Europäisches Patentamt
European Patent Office
Office européen des brevets

(11) **EP 2 246 294 B1**

(12) **EUROPEAN PATENT SPECIFICATION**

(45) Date of publication and mention
of the grant of the patent:
**03.09.2014 Bulletin 2014/36**

(21) Application number: **08872309.3**

(22) Date of filing: **13.11.2008**

(51) Int Cl.:
*C01B 3/38* (2006.01)          *F01N 9/00* (2006.01)
*H01M 8/06* (2006.01)          *F02D 41/00* (2006.01)
*F01N 3/035* (2006.01)          *F02D 19/06* (2006.01)
*F02D 41/14* (2006.01)

(86) International application number:
**PCT/JP2008/070698**

(87) International publication number:
**WO 2009/101736 (20.08.2009 Gazette 2009/34)**

(54) **CONTROL METHOD FOR FUEL REFORMER**

STEUERVERFAHREN FÜR BRENNSTOFF REFORMIERUNGSVORRICHTUNG

PROCÉDÉ DE RÉGULATION POUR UN REFORMEUR DE COMBUSTIBLE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **13.02.2008 JP 2008031573**

(43) Date of publication of application:
**03.11.2010 Bulletin 2010/44**

(73) Proprietor: **Honda Motor Co., Ltd.**
**Minato-ku**
**Tokyo 107-8556 (JP)**

(72) Inventors:
• **IWAMOTO, Jun**
**Wako-shi**
**Saitama 351-0193 (JP)**
• **MIKAMI, Hitoshi**
**Wako-shi**
**Saitama 351-0193 (JP)**

• **MOTOHASHI, Go**
**Wako-shi**
**Saitama 351-0193 (JP)**
• **YASUI, Yuji**
**Wako-shi**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**EP-A2- 1 676 991        WO-A1-02/070873**
**JP-A- 2002 121 002        JP-A- 2003 112 902**
**JP-A- 2006 183 645        US-A- 5 544 639**
**US-A- 5 857 163        US-A1- 2004 205 998**
**US-B1- 6 276 128**

Printed by Jouve, 75001 PARIS (FR)

**Description**

TECHNICAL FIELD'

The present invention relates to a control <u>method</u> for a fuel reformer and, in particular, relates to a control <u>method</u> for a fuel reformer capable of control in which degradation of the reforming catalyst is taken into account.

BACKGROUND ART

Hydrogen energy is green energy that has gained attention as a petroleum alternative energy of the future, and in recent years, has been applied as an energy source of fuel cells and internal combustion engines. In the research into internal combustion engines utilizing hydrogen, for example, there is hydrogen engines, hydrogen-boosted engines, reducing agent in NOx purification apparatuses, auxiliary power supplies using fuel cells, and the like. Under these circumstances, a great deal of research is also related to the production of hydrogen.

Methods of producing hydrogen by separating raw materials containing hydrogen atoms such as hydrocarbon fuel, water, and alcohol by way of catalytic reforming, thermal decomposition, electrolysis, or the like, and recombination are known as a production method of hydrogen. In recent years, among these production methods, research into fuel reformers to produce hydrogen by catalytic reforming has been vigorously carried out.

The partial oxidation reaction of hydrocarbon fuel (hereinafter referred to simply as "fuel") as shown in the following formula (1) has been known as a reforming reaction of the reforming catalyst of such a fuel reformer, for example. For this partial oxidation reaction, since the reaction is an exothermic reaction using hydrocarbons and oxygen and thus progresses spontaneously, once the reaction beings, hydrogen can be continuously produced without supplying heat from outside.

Alternatively, a steam reforming reaction as shown in the following formula (2) is also known as a reforming reaction. This steam reforming reaction is an endothermic reaction using hydrocarbons and steam, and is not a reaction that progresses spontaneously. As a result, the steam reforming reaction is an easily controlled reaction relative to the partial oxidation reaction. On the other hand, it is necessary to input energy such as of a heat supply from outside.

In addition, in a case of fuel and oxygen coming to coexist in a high temperature state, the combustion reaction as shown in the following formula (3) also progresses on the catalyst.

$$C_nH_m + \frac{1}{2}nO_2 \rightarrow nCO + \frac{1}{2}mH_2 \qquad (1)$$

$$C_nH_m + nH_2O \rightarrow nCO + \left(n + \frac{1}{2}m\right)H_2 \qquad (2)$$

$$C_nH_m + \left(n + \frac{1}{4}m\right)O_2 \rightarrow nCO_2 + \frac{1}{2}mH_2O \qquad (3)$$

In order to efficiently produce hydrogen in the above such fuel reformer, it is important to maintain the reforming catalyst of the fuel reformer at an optimum temperature due to the following reasons.

For example, in a case of reforming with diesel or gasoline as the fuel, the optimum temperature is limited to within a range of comparatively high temperatures. More specifically, in a case of having reformed the above-mentioned fuel by way of a partial oxidation reaction with a reforming catalyst supporting rhodium and platinum, the optimum reaction temperature is limited to within the range of from about 800°C to about 1000°C.

In a case of causing to react at a temperature lower than this optimum reaction temperature, the fuel supplied will be emitted unreacted in an unaltered state, and the reactivity will decline further by adhering on the reforming catalyst as a soluble organic fraction (SOF) component and carbonize.

In addition, in a case of causing to react at a temperature higher than this optimum reaction temperature, the catalyst will undergo sintering and the reactivity will decline, a solid-phase reaction will occur due to the reaction heat, and the constituent phases of the catalyst will change and deactivate.

Compared to gasoline, diesel in particular contains hydrocarbons having high carbon numbers and is difficult to break down, and it is difficult to cause to react equally over the wide range of the constituent ratios of hydrocarbon molecules; therefore, it is easy for carbon to deposit on the catalyst. As a result, it is necessary to cause diesel to react by maintaining at a temperature higher than for gasoline.

Consequently, it has been considered to suppress the deposition of carbon in the reforming reaction by supplying an oxidant such as steam or oxygen to the fuel reformer in excess. However, if steam is supplied in excess, a large amount of external energy is necessary in order to produce hydrogen due to the thermal efficiency declining. In addition, if oxygen is supplied in excess, the yield of hydrogen will decline due to excessive combustion, and the activity of the catalyst will decline due to excessive temperature rise and may deactivate depending on the situation.

As described above, in order to efficiently produce hydrogen by a fuel reformer, temperature control of the reforming catalyst on which the reforming reaction is carried out is important. Therefore, techniques of controlling the temperature of the reforming catalyst are considered below.

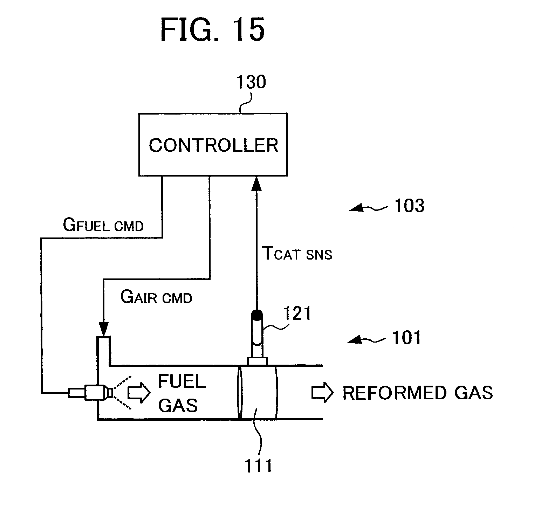

FIG. 15 is a schematic diagram showing a configuration of a control apparatus 103 for a fuel reformer 101 of a first technique.

In the first technique shown in FIG. 15, the control apparatus 103 is configured to include a temperature sensor 121 that detects a temperature of a reforming catalyst 111 of the fuel reformer 101, and a controller 130 that calculates an optimum supply amount $G_{AIR\ CMD}$ of air and supply amount $G_{FUEL\ CMD}$ of fuel to supply to the reforming catalyst, based on a detected temperature $T_{CAT\ SNS}$ of this temperature sensor 121, and outputs these command values $G_{AIR\ CMD}$ and $G_{FUEL\ CMD}$ to the fuel reformer 101.

The fuel reformer 101 supplies air and fuel to the reforming catalyst 111 in accordance with the command values $G_{AIR\ CMD}$ and $G_{FUEL\ CMD}$ from the controller 130, and produces reformed gas containing hydrogen and carbon monoxide. In addition, herein, it is also possible to control the temperature of the reforming catalyst 111 by adjusting the supply amount $G_{AIR\ CMD}$ of air and the supply amount $G_{FUEL\ CMD}$ of fuel.

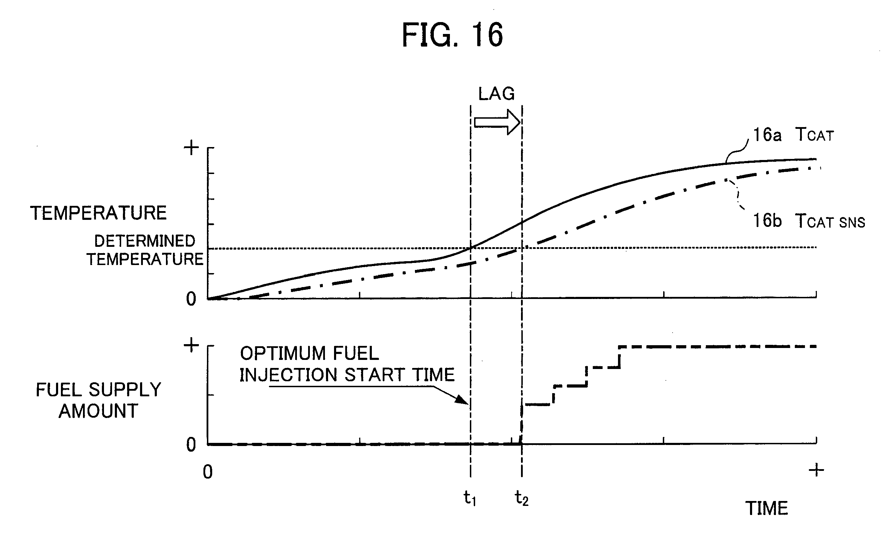

FIG. 16 is a time chart showing an example of control of the fuel reformer by the first technique. In FIG. 16, the horizontal axis indicates time, and the vertical axis indicates the temperature and fuel supply amount $G_{FUEL\ CMD}$. In addition, the solid line 16a indicates time change of the actual temperature $T_{CAT}$ of the reforming catalyst, the dotted line 16b indicates the detected temperature $T_{CAT\ SNS}$ of the temperature sensor, and the determined temperature indicates an optimum temperature of the reforming catalyst at which to start the injection of fuel.

As shown in FIG. 16, a delay occurs in the detected temperature $T_{CAT\ SNS}$ of the temperature sensor relative to the actual temperature $T_{CAT}$. As a result, the actual fuel injection start time $t_2$ will lag relative to the optimum fuel injection start time $t_1$, i.e. the time $t_1$ at which the actual catalyst temperature $T_{CAT}$ exceeds the determined temperature. As a result, the time required in activation of the reforming catalyst may increase, and the emission amount of unreacted hydrocarbons may increase.

In addition, since the detection section of the temperature sensor is exposed to steam and reducing gas of high temperature, it is necessary to improve the durability in order to prevent corrosion and degradation; however, in this case, the responsiveness will decline. As a result, in a case of using a temperature sensor in the fuel reformer, the aforementioned detection delay becomes obvious.

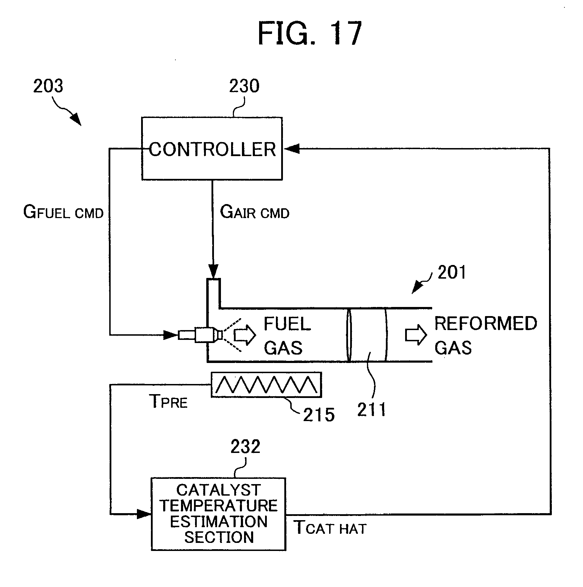

FIG. 17 is a schematic diagram showing a configuration of a control apparatus 203 of a fuel reformer 201 of a second technique.

With the second technique shown in FIG. 17, the temperature of a reforming catalyst 22 is estimated based on a thermal model of the catalyst, and the temperature of the fuel reforming 201 is controlled based on this temperature thus estimated. More specifically, the control apparatus 203 is configured to include a catalyst temperature estimation section 232 that sets a temperature $T_{PRE}$ of a heater 215 that heats the reforming catalyst 211 of the fuel reformer 201 as an input and calculates an estimated temperature $T_{CAT\ HAT}$ of the reforming catalyst 211 based on a predetermined catalyst thermal model, and a controller 230 that calculates an optimum supply amount $G_{AIR\ CMD}$ of air and supply amount $G_{FUEL\ CMD}$ of fuel to supply to the reforming catalyst 211 based on the estimated temperature $T_{CAT\ HAT}$ of this catalyst temperature estimation section 232, and outputs these command values $G_{AIR\ CMD}$ and $G_{FUEL\ CMD}$ to the fuel reformer 201.

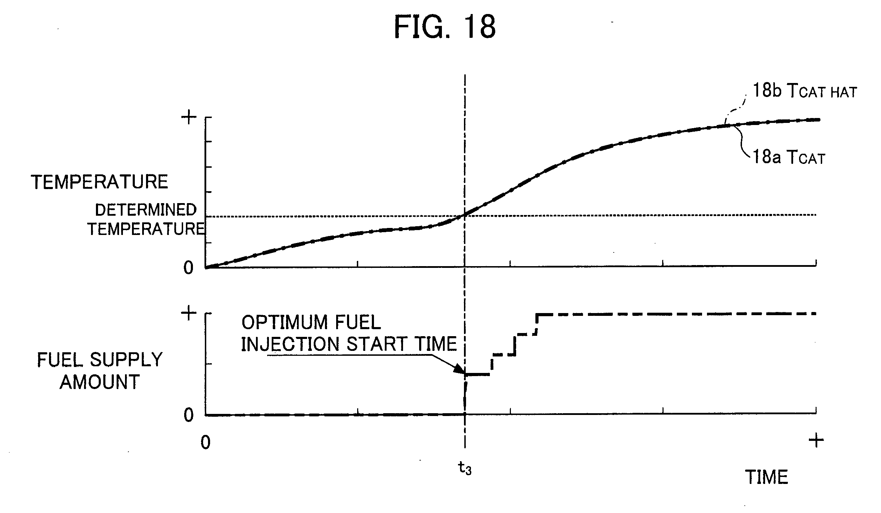

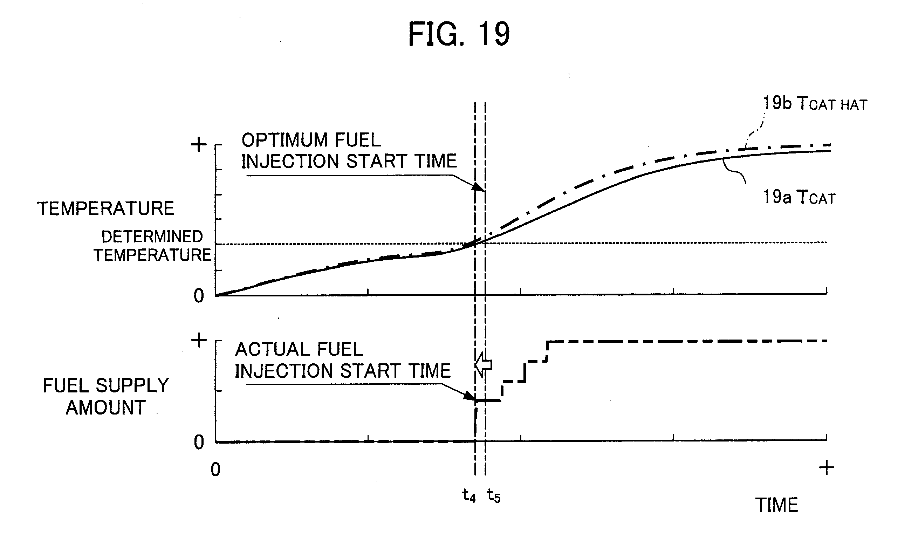

FIGS. 18 and 19 are time charts that respectively show examples of control of a fuel reformer by the second technique. More specifically, FIG. 18 shows an example of control in a state prior to the reforming catalyst degrading, and FIG. 19 shows an example of control in a state after the reforming catalyst has degraded. In addition, in FIGS. 18 and 19, the solid lines 18a and 19a indicate time change of the actual temperature $T_{CAT}$ of the reforming catalyst, and the point-dashed lines 18b and 19b indicate an estimated temperature $T_{CAT\ HAT}$ of catalyst temperature estimation.

As shown in FIG. 18, in the state prior to the reforming catalyst degrading, the estimated temperature $T_{CAT\ HAT}$ of the catalyst temperature estimation section matches the actual temperature $T_{CAT}$ of the reforming catalyst. This enables starting of the injection of fuel at the optimum fuel injection time $t_3$.

On the other hand, as shown in FIG. 19, in a state after the reforming catalyst has degraded, a delay occurs in the estimated temperature $T_{CAT\ HAT}$ of the catalyst temperature estimation section relative to the actual temperature $T_{CAT}$ of the reforming catalyst. In other words, since the rate of temperature rise is slow when the reforming catalyst degrades, the temperature $T_{CAT\ HAT}$ estimated based on the catalyst thermal model prior to degrading precedes the actual temperature $T_{CAT}$ of the reforming catalyst. Due to this, the actual fuel injection start time $t_4$ will precede the optimum fuel injection start time $t_5$, i.e. the time $t_5$ at which the actual temperature $T_{CAT}$ exceeds the determined temperature. As a result, the time required in activation of the reforming catalyst may increase, and the emitted amount of unreacted hydrocarbons may increase.

As described above, temperature control that matches degradation of the reforming catalyst is difficult with the first and second techniques.

Incidentally, in addition to the aforementioned techniques, a great deal of research has been made also relating to the control of temperature of catalysts provided to the exhaust system of an internal combustion engine. Consequently, applying such a technique relating to temperature control of a catalyst in the exhaust system of an internal combustion engine to temperature control of a reforming catalyst of a fuel reformer will be considered next.

For example, in Patent Document 1, a control apparatus is exemplified that detects degradation of the catalyst by estimating the temperature of the catalyst based on a thermal model, similarly to the aforementioned first technique, and comparing the detected temperature of a temperature sensor that detects the temperature of the catalyst with this estimated temperature. In addition, with this control apparatus of Patent Document 1, in a case in which the detected temperature of the temperature sensor is no higher than the light-off temperature of the catalyst, the estimated temperature of the catalyst is corrected in response to the detected temperature of the temperature sensor based on the thermal model. This makes temperature control that takes degradation of the catalyst into account possible.

In addition, in Patent Document 2, a control apparatus is exemplified that estimates a temperature of a catalyst based on a thermal model, and adjusts a parameter related to control of an engine such as ignition timing and a target air/fuel ratio, based on this estimated temperature. In particular, with this control apparatus, a model coefficient of the thermal model is corrected based on deviation between the estimated temperature of the catalyst that is based on the thermal model and the detected temperature of the temperature sensor detecting the temperature of the catalyst. This makes temperature control that takes degradation of the catalyst into account possible.

Patent Document 1: International Publication No. WO 2002/70873
Patent Document 2: Japanese Unexamined Patent Application Publication No. 2006-183645

US 5,857,163 A and US 5,544,639 A each disclose a control apparatus that controls the temperature of a catalyst for treating internal combustion engine exhaust gases comprising: temperature sensors for detecting the catalyst temperature; temperature' prediction means for estimating the catalyst temperature based on an accurate temperature model associated to several parameters which take into account the catalyst deterioration; temperature control means and correction means for correcting the correlation model used to estimate the catalyst temperature.

JP 2002-121002 A discloses a control apparatus for a fuel reformer comprising temperature detection means, temperature estimation means, temperature estimation means, temperature control means and temperature correction means.

DISCLOSURE OF THE INVENTION

Problems to be Solved by the Invention

However, with the control apparatus of Patent Document 1, since only a constant included in the thermal model is corrected, the catalyst after degradation cannot be reproduced with sufficient precision. In addition, the correction period of the thermal model is also limited to a period up to when the catalyst reaches the light-off temperature. As a result, in a case having applied the control apparatus of Patent Document 1 to temperature control of a fuel reformer, the emission amount of unreacted hydrocarbons may increase, fuel efficiency may deteriorate, and the temperature of the reforming catalyst may rise excessively and degrade.

In addition, with the control apparatus of Patent Document 2, the thermal model is corrected by a successive least-squares method that can only correct a constant contained in a linear model. However, the exothermic characteristic of the reforming reaction and the like are described by a non-linear function. Therefore, with the control apparatus of Patent Document 2, the catalyst after degradation cannot be reproduced with sufficient precision. As a result, in a case of having applied the control apparatus of Patent Document 2 to temperature control of a fuel reformer, when the temperature of the catalyst changes suddenly such as during rapid warm-up control execution immediately after start up or during regeneration control execution of the catalyst, the emitted amount of unreacted hydrocarbons may increase, fuel economy may deteriorate, and the temperature of the reforming catalyst may rise excessively and degrade.

The present invention has been made taking the aforementioned points into account, and has an object of providing a control method of a fuel reformer that can control taking into account the non-linearity of the thermal model of the reforming reaction. model of the reforming reaction.

Means for Solving the Problems

In order to achieve the above-mentioned object, the present invention provides a control apparatus <u>method</u> for a fuel reformer that controls the temperature of a reforming catalyst (11) of the fuel reformer (1) <u>in accordance with claim 1</u>. A control apparatus for <u>performing the method</u> includes: a temperature detection means (21) for detecting, the catalyst temperature; a temperature estimation means (32) for estimating, with parameters characterizing a reforming reaction of the reforming catalyst set as a first parameter ($T_{CAT}$, $T_{CAT\ HAT}$) and a second parameter ($C_{CAT}$), respectively, the catalyst temperature based on a correlation model associating the first parameter and the second parameter; a temperature control means (30) for controlling a temperature of the reforming catalyst based on an estimated temperature ($T_{CAT\ HAT}$) of the temperature estimation means; and a model correction means (34) for defining a plurality of correction weighting functions ($W_0$, $W_1$, $W_2$, $W_3$, $W_4$) that set the first parameter to a domain of definition, calculating a plurality of local correction coefficients ($K_{CL0}$, $K_{CL1}$, $K_{CL2}$, $K_{CL3}$, $K_{CL4}$) that is multiplied by each of the plurality of correction weighting functions, based on the detected temperature of the temperature detection means and the estimated temperature ($T_{CAT\ HAT}$) of the temperature estimation means, and correcting the correlation model based on the plurality of correction weighting functions and the plurality of local correction coefficients.

According to this configuration, the catalyst temperature is estimated based on the correlation model, which relates to the first parameter and second parameter characterizing the reforming reaction and associates these parameters, and the temperature of the reforming catalyst is controlled based on this estimated temperature. In this way, it is possible to control to a target temperature without overshoot occurring by controlling the temperature of the reforming catalyst based on an estimated temperature that does not have lag relative to the actual reforming catalyst temperature. In particular, since the reforming catalyst may deactivate in a case of overshoot having occurred due to use in a high temperature region close to heat-resistance limit, it is preferred to avoid overshoot of the temperature as much as possible.

In addition, a model correction means is provided that defines the plurality of correction weighting functions that set the first parameter to a domain of definition, calculates a plurality of local correction coefficients that are multiplied by this correction weighting function, and correct the correlation model based on the plurality of correction weighting functions and local correction coefficients.

This enables a temperature close to the real temperature of the reforming catalyst to be estimated, and thus the reforming catalyst to be controlled to the target temperature with high precision, even in a case of the correlation model having shifted from the actual behavior of the reforming catalyst due to degradation of the reforming catalyst, for example, by correcting the correlation model by way of the model correction means. In addition, herein, even in a case in which degradation of the reforming catalyst shows a non-linear characteristic, it is possible to correct the correlation model to match this degradation by introducing the above such plurality of correction weighting functions to correct the correlation model. Therefore, the temperature of the reforming catalyst can be controlled at higher precision.

The first parameter is the catalyst temperature ($T_{CAT}$, $T_{CAT\ HAT}$), and the second parameter is a catalytic reaction thermal coefficient ($C_{CAT}$) that indicates a heat generation state of a reforming reaction of the reforming catalyst.

According to this configuration, the first parameter is set to be the catalyst temperature, and the second parameter is set to be the catalytic reaction thermal coefficient. Even in a case in which the reforming catalyst degrades and the characteristic relating to the catalyst temperature of the catalytic reaction thermal coefficient has changed, this enables the correlation model to be corrected taking into account this characteristic change. Therefore, the temperature of the reforming catalyst can be controlled to the target temperature at even higher precision.

Preferably, the control apparatus further includes a detected value estimation means (341) for estimating an output value of the temperature detection means in accordance with an estimated temperature ($T_{CAT\ HAT}$) of the temperature estimation means, based on a model of the temperature detection means. The model correction means calculates the plurality of local correction coefficients so that deviation (em) between the detected temperature ($T_{CAT\ SNS}$) of the temperature detection means and the estimated temperature ($T_{CSNS\ HAT}$) of the detected value estimation means converges.

According to this configuration, based on the model of the catalyst temperature means, the output value of this catalyst temperature means is estimated, and the local correction coefficient is calculated so that the deviation between this estimated temperature and the detected temperature of the catalyst temperature means converges. Incidentally, the deviation between this estimated temperature and detected temperature causes degradation of the reforming catalyst. It is possible to suitably correct the correlation model to match the degradation of the reforming catalyst by calculating the local correction coefficients so that this deviation converges.

Preferably, the model correction means calculates the plurality of local correction coefficients based on response specifying control.

According to this configuration, the plurality of local correction coefficients is calculated based on response specifying control. For example, in a case of calculating such a plurality of local correction coefficients simultaneously, there is mutual interference, and cyclically oscillating behavior may be expressed and may diverge. However, by calculating the plurality of local correction coefficients based on response specifying control, it can be calculated stably without inducing such interference.

Preferably, in a case of having set, in the correlation model, the first parameter to a domain of definition, the second parameter to a range of value, and a region in which the second parameter changes for the first parameter to a change region, the plurality of correction weighting functions is each a function that changes within the change region, and is set so as to intersect each other within the change region.

According to this configuration, a region in which the second parameter changes is set as a change region, and the plurality of correction weighting functions changes within this change region, and is set so as to intersection with each other within this change region. In other words, by mainly correcting only a region in which the second parameter changes, the correlation mode can be precisely corrected without requiring an excessive operational load.

Preferably, the temperature detection means detects a catalyst temperature of a portion of the reforming catalyst at which the reforming reaction temperature is the highest, and the temperature control means controls the temperature of the reforming catalyst so that the estimated temperature of the temperature estimation means is lower than a predetermined deactivation temperature ($T_{CAT\ H}$) of the reforming catalyst.

According to this configuration, the catalyst temperature of a portion in the reforming catalyst at which the reforming reaction temperature is the highest is detected by the temperature detection means, and the temperature of the reforming catalyst is controlled so that the estimated temperature of the reforming catalyst is lower than a predetermined deactivation temperature. This enables degradation, resulting from the reforming catalyst exceeding the deactivation temperature, to be prevented.

Preferably, the fuel reformer is equipped in a vehicle provided with an internal combustion engine, and the reforming reaction of the reforming catalyst is an exothermic reaction.

According to this configuration, by storing the fuel reformer inside the bonnet, which is provided with the internal combustion engine, the temperature of the reforming catalyst can be controlled with higher precision. That is, inside the bonnet, the temperature change is small due to not being greatly influenced by wind and rain. As a result, the estimation accuracy of the temperature of the reforming catalyst can be further improved.

Preferably, the temperature control means controls the temperature of the reforming catalyst by sliding mode control based on a predetermined conversion function setting parameter ($V_{POLE}$)·

According to this configuration, the temperature of the reforming catalyst is controlled by sliding mode control based on a predetermined conversion function setting parameter. This enables control to be performed so that the temperature of the reforming catalyst is brought close within a predetermined range, and thus the fuel reformer to be operated stably, for example.

Preferably, the conversion function setting parameter is set within a range of -1 to 0 to a value closer to -1 than 0, in a case in which an operating state of the fuel reformer is in a steady state.

According to this configuration, in a case of the operating state of the fuel reformer being a steady state, the conversion function setting parameter is set within the range of -1 to 0 to a value closer to -1 than 0. In particular, this enables excessive consumption of fuel to be suppressed when temperatures rise, and enables overshoot of the temperature of the reforming catalyst to be suppressed.

BRIEF DESCRIPTION OF THE DRAWINGS

FIG. 1 is a schematic diagram showing a configuration of a fuel reformer and a control method thereof relating to an embodiment of the present invention;

FIG. 2 is a block diagram showing a configuration of a controller relating to the aforementioned embodiment;

FIG. 3 is a graph showing a phase plane between the temperature deviation amount e(k-1) and e(k) relating to the aforementioned embodiment;

FIG. 4 is a graph showing a relationship between a conversion function setting parameter $V_{POLE}$ and a convergence time of the temperature deviation amount;

FIG. 5 is a graph showing a configuration of a $V_{POLE}$ table stored in a $V_{POLE}$ setting section relating to the aforementioned embodiment;

FIG. 6 is a graph showing a configuration of a correlation model between a catalytic reaction temperature coefficient $C_{CAT}$ and catalyst temperature $T_{CAT}$ relating to the aforementioned embodiment;

FIG. 7 is a graph showing a configuration of correction weighting functions $W_0$ to $W_4$ relating to the aforementioned embodiment;

FIG. 8 is a block diagram showing a configuration of a correction coefficient calculation section relating to the aforementioned embodiment;

FIG. 9 is a flowchart showing a sequence of main control of the fuel reformer by an ECU relating to the aforementioned embodiment;

FIG. 10 is a flowchart showing a sequence of catalyst temperature estimation processing relating to the aforementioned embodiment;

FIG. 11 is a time chart showing time change of the temperature of the reforming catalyst and a conversion function setting parameter relating to a comparative example of the aforementioned embodiment;

FIG. 12 is a time chart showing time change of the temperature of the reforming catalyst and a conversion function setting parameter relating to the aforementioned embodiment;

FIG. 13 is a time chart showing time change of the temperature $T_{CAT}$ of the reforming catalyst before degradation of the reforming catalyst, a fuel supply amount $G_{FUEL\ CMD}$, and a correction coefficient $K_C$ relating to the aforementioned embodiment;

FIG. 14 is a time chart showing time change of the temperature $T_{CAT}$ of the reforming catalyst after degradation of the reforming catalyst, a fuel supply amount $G_{FUEL\ CMD}$, and a correction coefficient $K_C$ relating to the aforementioned embodiment;

FIG. 15 is a schematic diagram showing a configuration of a control apparatus of a fuel reformer according to a first technique;

FIG. 16 is a time chart showing an example of control of the fuel reformer by the first technique;

FIG. 17 is a schematic diagram showing a configuration of a control apparatus of a fuel reformer according to a second technique;

FIG. 18 is a time chart showing an example of control of a fuel reformer by the second technique (prior to catalyst degradation); and

FIG. 19 is a time chart showing an example of control of a fuel reformer by the second technique (after catalyst degradation).

EXPLANATION OF REFERENCE NUMERALS

1       Fuel reformer
11      Reforming catalyst
21      Catalyst temperature sensor (temperature detection means)
3       ECU (control apparatus)
30      Controller (catalyst temperature control means)
32      Catalyst temperature estimation section (catalyst temperature estimation means)
34      Model correction section (model correction means)
341     Temperature sensor model (detected value estimation means)
342     Correction coefficient calculation section
36      Parameter setting section

PREFERRED MODE FOR CARRYING OUT THE INVENTION

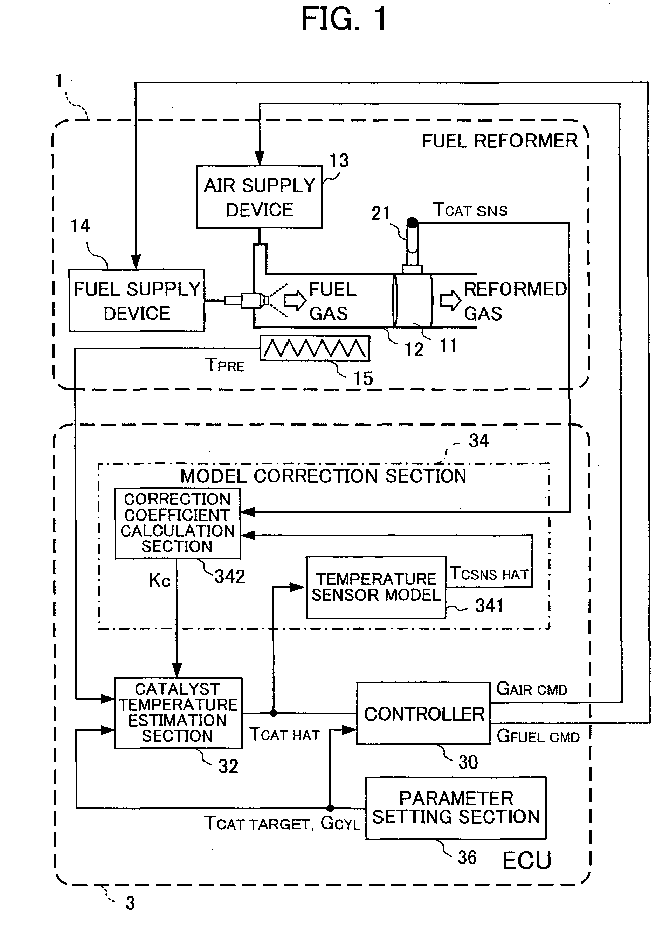

FIG. 1 is a schematic diagram showing a configuration of a fuel reformer 1 and an electronic control unit (hereinafter referred to as "ECU") 3 as a control method thereof relating to an embodiment of the present invention.

The fuel reformer 1 is configured to include a gas channel 12 of a cylindrical shape in which a reforming catalyst 11 is provided inside thereof, and an air supply device 13 and fuel supply device 14 that supply air and fuel from an end side of this gas channel 12. Specifically, this fuel reformer 1 is of straight-flow type in which the flow of gas on an inlet side of the reforming catalyst 11 and a flow of gas on an outlet side of the reforming catalyst 11 are the same direction.

The air supply device 13 is configured by a compressor, valve, and the like, which are not illustrated, and supplies air into the gas channel 12 in accordance with a control signal ($G_{AIR\ CMD}$) output from the ECU 3.

The fuel supply device 14 is configured by a fuel tank, valve, injector, and the like, which are not illustrated, and supplies fuel into the gas channel 12 in accordance with a control signal ($G_{FUEL\ CMD}$) output from the ECU 3.

The air and fuel supplied by the air supply device 13 and the fuel supply device 14 are mixed inside the gas channel 12, and are supplied to the reforming catalyst 11 as fuel gas.

The reforming catalyst 11 reforms the fuel gas supplied from the air supply device 13 and the fuel supply device 14, and produces reformed gas containing hydrogen, carbon monoxide, and hydrocarbons. More specifically, this reforming catalyst 11 produces reformed gas by way of a partial oxidation reaction of the hydrocarbon fuel and air constituting the fuel gas, i.e. an exothermal reaction.

In the present embodiment, as the reforming catalyst 11, a catalyst prepared by weighing powder of ceria and rhodium so as to make the mass ratio of rhodium to ceria 1%, producing a slurry by placing this powder in a ball mill along with an aqueous medium and agitating and mixing, and then after coating this slurry on a support made of Fe-Cr-Al alloy, drying and calcining this over 2 hours at 600°C.

In addition, a heater 15, which preheats the reforming catalyst 11 with fuel gas inside the gas channel 12 and promotes activity of the reforming catalyst 11, is provided in the fuel reformer 1.

Additionally, a catalyst temperature sensor 21 as a temperature detection means that detects the temperature of the reforming catalyst 11 and outputs the temperature thus detected to the ECU 3 as a detected temperature $T_{CAT\ SNS}$, and a heater temperature sensor (not illustrated) that detects the temperature of the heater 15 and outputs the temperature thus detected to the ECU 3 as a detected temperature $T_{PRE}$ are provided in the fuel reformer 1. In addition, herein, the catalyst temperature sensor 21 is preferably provided in the fuel reformer 1 so as to detect the temperature of the portion having the highest temperature in the reforming catalyst 11.

The fuel reformer 1 configured as described above is, for example, equipped in a vehicle, which is not illustrated, provided with an internal combustion engine. In this case, the reformed gas produced by the fuel reformer 1 is preferably introduced to the exhaust system of the internal combustion engine, which is provided with a catalyst and filter that purify the exhaust.

The ECU 3 is provided with an input circuit having functions of shaping input signal waveforms from various sensors, correcting the voltage levels to predetermined levels, converting analogy signal values to digital signal values, etc., and a central processing unit (hereinafter referred to as "CPU"). In addition, the ECU 3 is provided with a memory circuit that stores various operational programs executed by the CPU, maps and tables referred to by this program, calculation results of programs, etc., and an output circuit that outputs control signals to the fuel reformer 1.

FIG. 1 only shows the functional blocks in the aforementioned ECU 3 that relate to control of the fuel reformer 1. More specifically, the functional blocks of the ECU 3 are configured to include a controller 30 as a catalyst temperature control means for controlling the fuel reformer 1, a catalyst temperature estimation section 32 as a catalyst temperature estimation means for estimating the temperature of the reforming catalyst 11, a model correction section 34 as a model correction means, and a parameter setting section 36 that sets various parameters.

The catalyst temperature estimation section 32 estimates the temperature of the reforming catalyst 11 based on a temperature differential equation described in detail later, and outputs the temperature thus estimated to the controller 30 and model correction section 34 as an estimated temperature $T_{CAT\ HAT}$.

The model correction section 34 corrects the correlation model included in the temperature differential equation of the catalyst temperature estimation section 32 based on the detected temperature $T_{CAT\ SNS}$ and the estimated temperature $T_{CAT\ HAT}$.

The controller 30 controls the temperature of the reforming catalyst by calculating the air supply amount $G_{AIR\ CMD}$ and fuel supply amount $G_{FUEL\ CMD}$ of the fuel reformer 1 based on sliding mode control, which is described later in detail, so that the deviation between the estimated temperature $T_{CAT\ HAT}$ output from the catalyst temperature estimation section 32 and the target temperature $T_{CAT\ TARGET}$ of the fuel reformer output from the parameter setting section converges, and outputting this air supply amount $G_{AIR\ CMD}$ and fuel supply amount $G_{FUEL\ CMD}$ thus calculated to the fuel reformer 1.

The parameter setting section 36 sets a target temperature $T_{CAT\ TARGET}$ of the reforming catalyst 11 and a hydrogen production amount (load of fuel reformer) $G_{CYL}$ from the reforming catalyst 11 according to operating conditions of the fuel reformer 1, and outputs this target temperature $T_{CAT\ TARGET}$ and hydrogen production amount $G_{CYL}$ to the controller 30 and catalyst temperature estimation section 32.

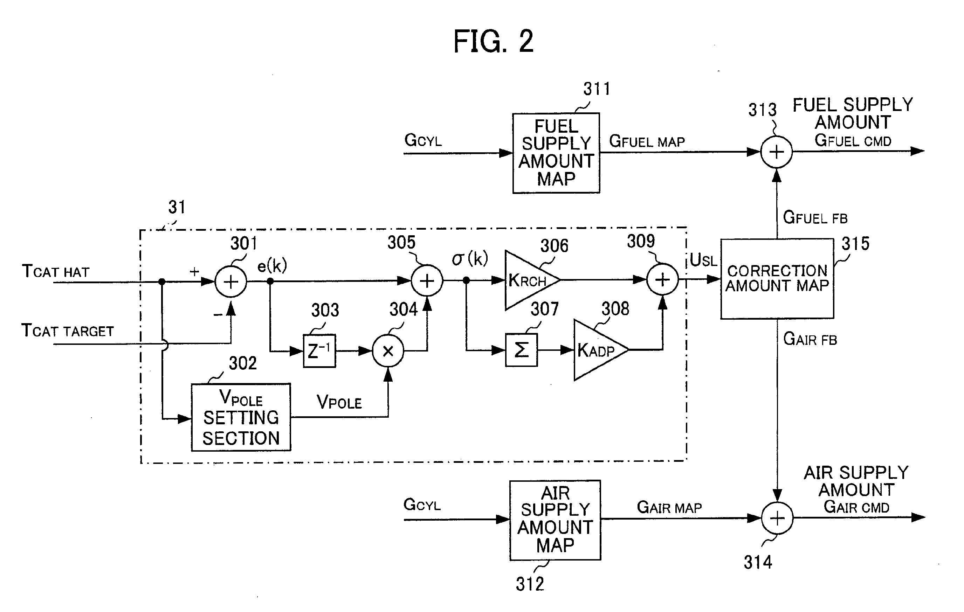

The configuration of the controller 30 will be explained in detail while referring to FIGS. 2 to 5.

FIG. 2 is a block diagram showing the configuration of the controller 30.

The controller 30 is configured to include a sliding mode controller 31 that calculates a control input $U_{SL}$ so that the estimated temperature $T_{CAT\ HAT}$ converges to the target temperature $T_{CAT\ TARGET}$, and a fuel supply amount map 311, air supply amount map 312, and correction amount map 315 for calculating the fuel supply amount $G_{FUEL\ CMD}$ and air supply amount $G_{AIR\ CMD}$ based on the hydrogen production amount $G_{CYL}$ and the control input $U_{SL}$.

Herein, sliding mode control will be explained. Sliding mode control is a further development of so-called response specifying control that can specify a convergence rate of a control amount, and is control that can separately specify the pursuit rate to the target value of the control amount and the convergence rate of the control amount in the case of noise being applied.

The reforming catalyst of the fuel reformer described above is used at a high temperature when producing reformed gas, and is limited also to this temperature range. For example, due to deactivation resulting in a case of this temperature range having been exceeded, overshoot of the temperature of the reforming catalyst is preferably avoided if at all possible. In addition, in a case of falling below the temperature range, the rate of the reforming reaction may decline and come to be an impediment to autonomous operation. Consequently, by performing such sliding mode control, it becomes possible to control the temperature of the reforming catalyst within a predetermined temperature range without causing overshoot.

In addition, in the following explanation, the symbol (k) is a symbol indicating discretized time, and indicates being data detected or calculated in each predetermined control period. Specifically, in a case in which the symbol (k) has been set to be data detected or calculated at the present control timing, the symbol (k-1) indicates being data detected or calculated at a previous control timing.

Operation of the sliding mode controller 31 will be explained.

First, as shown in the following formula (4), the deviation between the estimated temperature $T_{CAT\ HAT}(k)$ of the reforming catalyst and the target temperature $T_{CAT\ TARGET}(k)$ of the reforming catalyst is calculated by an adder 301, and this is defined as a temperature deviation amount e(k).

$$e(k) = T_{CAT\ HAT}(k) - T_{CAT\ TARGET}(k) \qquad (4)$$

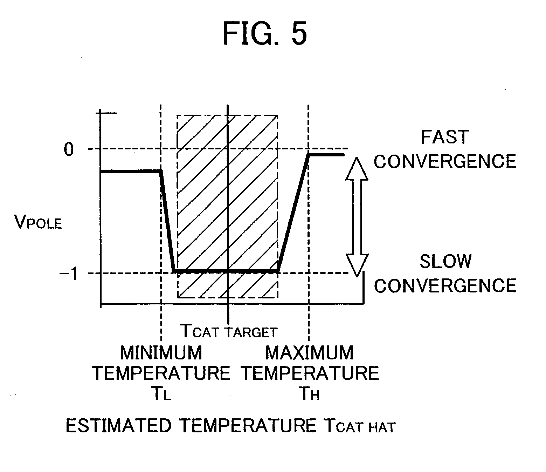

Next, $V_{POLE}$ is searched by a $V_{POLE}$ setting section 302 according to an estimated temperature $T_{CAT\ HAT}$, and the product of the $V_{POLE}$ thus found and a temperature deviation amount e(k-1) of a previous control time calculated by a delay computing unit 303 is calculated. $V_{POLE}$ is a conversion function setting parameter that is set to a value larger than -1 and smaller than 0, and is set based on a $V_{POLE}$ table described later with reference to FIG. 5.

Next, as shown in the following formula (5), the sum of the temperature deviation amount e(k) and the product $V_{POLE}$ x e(k-1) is calculated by an adder 305, and this is defined as a conversion function σ(k).

$$\sigma(k) = e(k) + V_{POLE} \times e(k-1) \qquad (5)$$

Herein, a relationship between the conversion function setting parameter $V_{POLE}$ and the convergence rate of the temperature deviation amount e(k) will be explained.

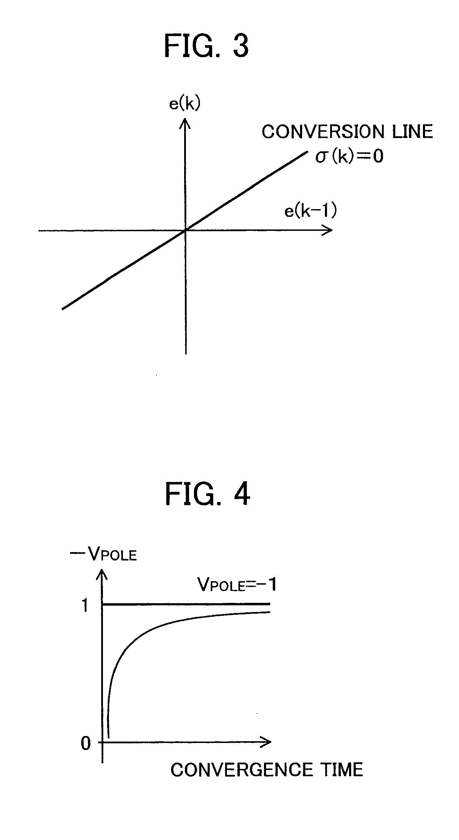

FIG. 3 is a graph showing a phase plane with the horizontal axis as the temperature deviation amount e(k-1) at a previous control time, and the vertical axis defined as the temperature deviation amount e(k) at a present control time.

On this phase plane, joining the temperature deviation amounts e(k) and e(k-1) satisfying σ(k)=0 forms a straight line having a slope of $-V_{POLE}$, as shown in FIG. 3. In particular, this straight line is called a conversion line. In addition, as shown in FIG. 3, since e(k-1)>e(k) from setting $-V_{POLE}$ to a value less than 1 and greater than 0, the temperature deviation amount e(k) will converge to 0. The sliding mode control is control that has focused on the behavior of the deviation amount e(k) on this conversion line.

Specifically, by performing control so that joining of the temperature deviation amount e(k) at a current control time and a temperature deviation amount e(k-1) at a previous control time appears on this conversion line, robust control against noise and modeling error is realized, and the temperature of the reforming catalyst can be made to converge to the target value thereof without overshooting.

FIG. 4 is a graph showing a relationship between the conversion function setting parameter $V_{POLE}$ and the convergence time of the temperature deviation amount. More specifically, the horizontal axis indicates the convergence time to the target value of the temperature deviation amount and the vertical axis indicates a slope ($-V_{POLE}$) of the conversion line. As shown in FIG. 4, the convergence time becomes longer as $-V_{POLE}$ approaches 1 from 0.

FIG. 5 is a graph showing a configuration of a $V_{POLE}$ table stored in the $V_{POLE}$ setting section 302 described above. More specifically, the horizontal axis shows the estimated temperature $T_{CAT\ HAT}$, and the vertical axis shows the conversion function setting parameter $V_{POLE}$. In addition, a maximum temperature $T_{CAT\ H}$ and a minimum temperature $T_{CAT\ L}$ are a maximum temperature and a minimum temperature of the reforming catalyst that are set in advance in order to perform the reforming reaction efficiently, respectively. More specifically, the maximum temperature $T_{CAT\ H}$ is a deactivation temperature, i.e. a temperature at which the reforming catalyst may deactivate and degrade if it exceeds this temperature. In addition, the minimum temperature $T_{CAT\ L}$ is a temperature at which the rate of the reforming reaction may decline if the reforming catalyst drops below this temperature. Therefore, for the temperature of the reforming catalyst, it is preferable to steadily operate within the range from this minimum temperature $T_{CAT\ L}$ up to maximum temperature $T_{CAT\ H}$. Then, the target temperature $T_{CAT\ TARGET}$ of the reforming catalyst is normally set between the minimum temperature $T_{CAT\ L}$ and maximum temperature $T_{CAT\ H}$.

As described above, the convergence rate of the temperature deviation amount becomes fast as $V_{POLE}$ approaches 0, while the convergence rate of the temperature deviation amount becomes slow as $V_{POLE}$, approaches -1, and thus $V_{POLE}$ is set to a value larger than -1 and less than 0.

Consequently, in the present embodiment, the conversion function setting parameter $V_{POLE}$ is set based on the estimated temperature $T_{CAT\ HAT}$, as shown in the following formulas (6-1), (6-2), and (6-3).

$$V_{POLE} \simeq 0 \qquad (T_{CAT\ HAT} \leq T_{CAT\ L}) \qquad (6-1)$$

$$V_{POLE} \simeq -1 \qquad (T_{CAT\ L} < T_{CAT\ HAT} < T_{CAT\ H}) \qquad (6-2)$$

$$V_{POLE} \simeq 0 \qquad (T_{CAT\ HAT} \geq T_{CAT\ H}) \qquad (6-3)$$

By setting the conversion function setting parameter $V_{POLE}$ in this way, in a case of the estimated temperature $T_{CAT\ HAT}$ being between the minimum temperature $T_{CAT\ L}$ and the maximum temperature $T_{CAT\ H}$, the temperature of the reforming catalyst is made to gently converge with the target temperature $T_{CAT\ TARGET}$, and in a case of the estimated temperature $T_{CAT\ HAT}$ not being between the minimum temperature $T_{CAT\ L}$ and the maximum temperature $T_{CAT\ H}$, the temperature of the reforming catalyst can be made to quickly converge with the target temperature $T_{CAT\ TARGET}$. As a result, the temperature of the reforming catalyst is controlled so as to drift between the minimum temperature $T_{CAT\ L}$ and the maximum temperature $T_{CAT\ H}$.

Referring back to FIG. 2, a reaching-law input $U_{RCH}(k)$ and an adaptive-law input $U_{ADP}(k)$ are calculated based on the conversion function $\sigma(k)$ calculated as described above, and further, the sum of this reaching-law input $U_{RCH}(k)$ and adaptive-law input $U_{ADP}(k)$ is calculated by the adder 309, as shown in the following formula (7), and this is defined as a control input $U_{SL}(k)$.

$$U_{SL}(k) = U_{RCH}(k) + U_{ADP}(k) \qquad (7)$$

The reaching-law input $U_{RCH}(k)$ is an input for placing the temperature deviation amount onto the conversion line, and is calculated with an amplifier 306 by multiplying the conversion function $\sigma(k)$ by a reaching-law control gain $K_{RCH}$, as shown in the following formula (8).

$$U_{RCH}(k) = K_{RCH}\sigma(k) \qquad (8)$$

The adaptive-law input $U_{ADP}(k)$ suppresses the influences of modeling error and noise, is an input for placing the temperature deviation amount on the conversion line, and is calculated by calculating an integral of the conversion function $\sigma(k)$ with an integrator 307, and multiplying this value of the integral by the reaching-law control gain $K_{ADP}$. In addition, in this formula (9), AT is a control period.

$$U_{ADP}(k) = K_{ADP} \sum_{i=0}^{k} \Delta T \sigma(i) \qquad (9)$$

It should be noted that this reaching-law control gain $K_{RCH}$ and adaptive-law control gain $K_{ADP}$ are set to optimum values based on experimentation, so that the temperature deviation amount is stably placed on the conversion line, under the policy of temperature control of the reforming catalyst described above.

The fuel supply amount map 311 and the air supply amount map 312 respectively calculate the map values $G_{FUEL\ MAP}$ and $G_{AIR\ MAP}$ of the fuel supply amount and the air supply amount according to the hydrogen production amount $G_{CYL}$, based on a predetermined control map for supply amount determination.

The correction amount map 315 calculates the correction amounts $G_{FUEL\ FB}$ and $G_{AIR\ FB}$ of the fuel supply amount and air supply amount according to the control input $U_{SL}$ of the sliding mode controller 31, based on a predetermined control map for correction amount determination.

Herein, the setting policy of the control map for correction amount determination will be explained.

For example, in a case of the estimated temperature $T_{CAT\ HAT}$ being lower than the target temperature

$T_{CAT\ TARGET}$, it is necessary to cause the temperature of the reforming catalyst to rise. In this case, the temperature of the reforming catalyst can be made to increase by increasing the air supply amount or reducing the fuel supply amount. However, since the hydrogen production amount may decline by reducing the fuel supply amount, it is preferred to cause the temperature of the reforming catalyst to increase by increasing the air supply amount.

In addition, in a case of the estimated temperature $T_{CAT\ HAT}$ being higher than the target temperature $T_{CAT\ TARGET}$, it is necessary to cause the temperature of the reforming catalyst to decline. In this case, the temperature of the reforming catalyst can be made to decline by reducing the air supply amount or increasing the fuel supply amount. However, since the emitted amount of unburned fuel may increase by increasing the fuel supply amount, it is preferred to cause the temperature of the reforming catalyst to decline by reducing the air supply amount.

Under the aforementioned such policies, the control map for correction amount determination is set to match the control map for supply amount determination described above.

A fuel correction amount $G_{FUEL\ FB}$ and air correction amount $G_{AIR\ FB}$ calculated as described above are added to the fuel supply amount map value $G_{FUEL\ MAP}$ and the air supply amount map value $G_{AIR\ MAP}$, respectively, by the adders 313 and 314, these values thus added are defined as the fuel supply amount $G_{FUEL\ CMD}$ and air supply amount $G_{AIR\ CMD}$, and output to the fuel reformer.

Referring again to FIG. 1, the catalyst temperature estimation section 32 calculates the estimated temperature $T_{CAT\ HAT}(k)$ of the reforming catalyst 11, based on the temperature difference equation as shown in the following formula (10).

$$\frac{T_{CAT\ HAT}(k) - T_{CAT\ HAT}(k-1)}{\Delta T} =$$
$$+A_{CAT}\{T_{CAT\ HAT}(k-1) - T_A(k-1)\}$$
$$+\frac{B_{CAT}G_{CYL}(k-1)}{L_{CAT}G_{CYL\ MAX}}\{T_{PRE}(k-1) - T_{CAT\ HAT}(k-1)\}$$
$$+C_{CAT}(k-1)K_C(k-1)G_{CYL}(k-1) \qquad\qquad (10)$$

In this formula (10), the first term on the right side is an advective term, and is a term showing a contribution by the migration of heat between the reforming catalyst 11 and the atmosphere. The second term on the right is a heat-transfer term, and is a term showing a contribution by migration of heat between the reforming catalyst 11 and the heater 15. In addition, the third term on the right is a heat generation term, and is a term showing a contribution of heat generated by the reforming reaction of the reforming catalyst 11. In this formula (10) in particular, the heat generation term is a term influenced by the exothermic reaction of the reforming catalyst 11, and changes with degradation of the reforming catalyst 11.

In addition, the function and parameters of the formula (10) are defined as follows.

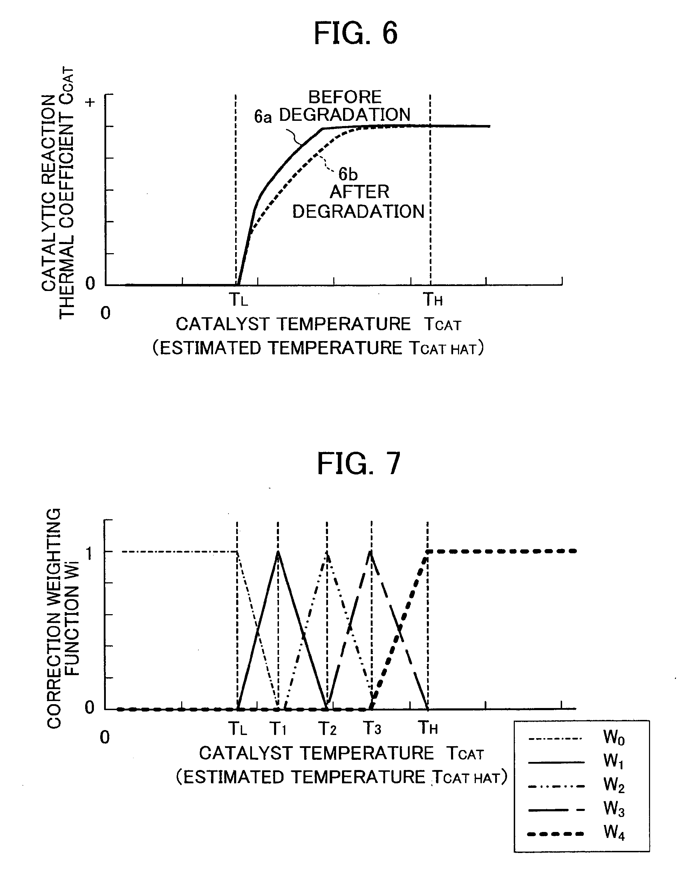

$C_{CAT}$ indicates a catalytic reaction thermal coefficient, and is calculated based on a correlation model shown in FIG. 6 described later.

$K_C$ indicates a correction coefficient of the catalytic reaction thermal coefficient $C_{CAT}$, and is calculated by the model correction section 34.

$L_{CAT}$ is a length along a layering direction of the reforming catalyst, and adopts a value set in advance.

$T_A$ is ambient temperature, and adopts a detected temperature of an ambient temperature sensor, which is not illustrated.

$G_{CYL\ MAX}$ is the maximum hydrogen production amount of the fuel reformer 1, and adopts a value set in advance.

In addition, $A_{CAT}$ and $B_{CAT}$ are parameters of the advective term and heat-transfer term, respectively, and are set to optimal values based on experimentation. In the present embodiment, although these parameters $A_{CAT}$ and $B_{CAT}$ are set based on the reforming catalyst prior to degradation, they are not limited thereto. For example, these parameters and constants may be set based on a catalyst that has been used for a predetermined time and has been degraded.

FIG. 6 is a graph showing a configuration of a correlation model between the temperature $T_{CAT}$ of the reforming catalyst as a first parameter, and the catalyst reaction thermal coefficient $C_{CAT}$ as a second parameter.

The catalytic reaction thermal coefficient $C_{CAT}$ is a coefficient indicating the heat generation state of the reforming reaction of the reforming catalyst, and is expressed as a non-linear function of the catalyst temperature $T_{CAT}$.

In addition, the correlation between this catalytic reaction thermal coefficient $C_{CAT}$ and catalyst temperature $T_{CAT}$ change with degradation of the reforming catalyst. More specifically, the solid line 6a indicates the correlation between the catalytic reaction thermal coefficient $C_{CAT}$ and catalyst temperature $T_{CAT}$ of the reforming catalyst prior to degradation, and the dotted line 6b indicates the correlation between the catalytic reaction thermal coefficient $C_{CAT}$ and catalyst temperature $T_{CAT}$ of the reforming catalyst after degradation. In this way, variation in the properties consequent upon degradation of the catalytic reaction thermal coefficient $C_{CAT}$ is not at a fixed rate, and also becomes non-linear.

As shown in FIG. 6, since the reforming catalyst is not activated and the reforming reaction does not start until the catalyst temperature $T_{CAT}$ reaches a predetermined first temperature $T_L$, the catalytic reaction thermal coefficient $C_{CAT}$ is a value close to 0.

The catalytic reaction thermal coefficient $C_{CAT}$ also increases with a rise in the catalyst temperature $T_{CAT}$ from when the catalyst temperature $T_{CAT}$ exceeds the first temperature TL until reaching a predetermined second temperature $T_H$. Herein, the catalytic reaction thermal coefficient $C_{CAT}$ for the reforming catalyst prior to degradation increases quickly with a rise in the catalyst temperature $T_{CAT}$ compared to the reforming catalyst after degradation.

In addition, when the catalyst temperature $T_{CAT}$ exceeds the second temperature $T_H$, the catalytic reaction thermal coefficient $C_{CAT}$ becomes substantially constant at a predetermined upper limit value, irrespective of the catalyst temperature $T_{CAT}$.

The catalyst temperature estimation section 32 calculates the catalytic reaction thermal coefficient $C_{CAT}$ according to the estimated temperature $T_{CAT\ HAT}$ based on such a correlation model of the reforming catalyst. In addition, although the first parameter was set as the catalyst temperature $T_{CAT}$ of the reforming catalyst 11 in the aforementioned explanation, the catalytic reaction thermal coefficient $C_{CAT}$ is calculated in actual control, due to the catalyst temperature $T_{CAT}$ being replaced with the estimated temperature $T_{CAT\ HAT}$.

In addition, in the present embodiment, the catalytic reaction thermal coefficient $C_{CAT}$ is calculated based on the correlation model of the reforming catalyst prior to degradation shown by the solid line 6a. In this case, the correlation model of the reforming catalyst after degradation as shown by the dotted line 6b is reproduced by multiplying the correction coefficient $K_C$ calculated by the model correction section 34 described later by the catalytic reaction thermal coefficient $C_{CAT}$.

Referring again to FIG. 1, the catalyst temperature estimation section 32 calculates the catalytic reaction thermal coefficient $C_{CAT}$ according to the estimated temperature $T_{CAT\ HAT}$ based on the aforementioned correlation model, and further estimates the temperature of the reforming catalyst 11 by the temperature difference equation shown in formula (10). Specifically, the estimated temperature $T_{CAT\ HAT}$ is calculated by the following formula (11) derived by rearranging the aforementioned formula (10).

$$
\begin{aligned}
T_{CAT\ HAT}(k) = & \left\{ 1 + A_{CAT}\Delta T - \frac{B_{CAT}G_{CYL}(k-1)\Delta T}{L_{CAT}G_{CYL\ MAX}} \right\} T_{CAT\ HAT}(k-1) \\
& + \frac{B_{CAT}G_{CYL}(k-1)\Delta T}{L_{CAT}G_{CYL\ MAX}} T_{PRE}(k-1) \\
& - A_{CAT}T_A(k-1)\Delta T \\
& + C_{CAT}(k-1)K_C(k-1)G_{CYL}(k-1)\Delta T
\end{aligned}
\qquad (11)
$$

The model correction section 34 is configured to include a temperature sensor model 341 as a detection value estimation means for estimating an output value of the catalyst temperature sensor 21, and a correction coefficient calculation section 342 that calculates a correction coefficient $K_C$ of the correlation model of the catalyst temperature estimation section 32, based on a correction algorithm described later.

The temperature sensor model 341 estimates a detected temperature of the catalyst temperature sensor 21 according to the estimated temperature $T_{CAT\ HAT}$ output from the catalyst temperature estimation section 32, based on a sensor model reproducing the output of the catalyst temperature sensor 21. More specifically, the temperature sensor model 341 calculates an output estimated temperature $T_{CSNS\ HAT}$ based on a sensor model shown in the following formula (12), which takes into account the response lag of the catalyst temperature sensor 21.

$$
T_{CSNS\ HAT}(k) = -K_S T_{CSNS\ HAT}(k-1) + (1 + K_S)T_{CAT\ HAT}(k) \qquad (12)
$$

In this formula (12), $K_S$ indicates a sensor lag coefficient, and is set to an optimal value in the range of $-1 < K_S < 0$ by experimentation and system identification.

The correction coefficient calculation section 342 calculates a correction coefficient $K_C$ such that the deviation between the detected temperature $T_{CAT\ SNS}$ output from the catalyst temperature sensor 21 and the output estimated temperature $T_{CSNS\ HAT}$ output from the temperature sensor model 341 converges. In other words, this correction coefficient calculation section 342 calculates the correction coefficient $K_C$ by way of setting the deviation between the detected temperature $T_{CAT\ SNS}$ and the output estimated temperature $T_{CSNS\ HAT}$ to be a matter mainly causing degradation of the reforming catalyst.

As described above, the catalytic reaction thermal coefficient $C_{CAT}$ shows a non-linear characteristic relative to the catalyst temperature $T_{CAT}$, as well as showing a non-linear characteristic relatively to the progression of degradation. Therefore, when calculating the correction coefficient $K_C$, in a case of having applied a control algorithm of successive least-squares method, fixed gain method, or the like, which are conventionally known, it is difficult to reproduce the non-linear characteristic of the catalytic reaction thermal coefficient $C_{CAT}$ due to only a constant in the model being able to be identified. In addition, although neural network control, which learns characteristics of tables and maps, is known conventionally as a method of reproducing non-linearity, it is difficult to put to practical use in temperature control of a fuel reformer due to this method lacking stability.

Consequently, in the present embodiment, a plurality of correction weighting functions $W_i$ ($i = 0, 1, 2, 3, 4$) is defined, and the correction coefficient $K_C$ that is the control target is disintegrated as a sum of local correction coefficients $K_{CL\ i}$ ($i = 0, 1, 2, 3, 4$), which are weighted by multiplying by these correction weighting functions $W_i$, as shown in the following formula (13).

$$K_C(k) = 1 + \sum_{i=0}^{4} W_i(k) K_{CL\ i}(k) \qquad (13)$$

FIG. 7 is a graph showing a configuration of the correction weighting functions $W_0$ to $W_4$.

As shown in FIG. 7, the correction weighting functions $W_i$ are coefficients for which the temperature $T_{CAT}$ (estimated temperature $T_{CAT\ HAT}$) of the reforming catalyst is set to a domain of definition and 0 to 1 is set as the range of values, respectively.

In addition, these correction weighting functions $W_i$ are set to a region of temperature in which the catalytic reaction thermal coefficient $C_{CAT}$ changes, i.e. a region of change from the first temperature $T_L$ to the second temperature $T_H$, and in this region of change, are set so as to intersect each other, while values thereof change between this region of change. More specifically, the temperatures $T_1$, $T_2$, and $T_3$ within this region of change are set at substantially equal intervals, and each of the correction weighting functions $W_i$ is set as follows due to the region of change being divided into four regions from this.

The correction weighting function $W_0$ is 1 from a temperature of 0 to $T_L$, decreases from 1 to 0 from $T_L$ to $T_1$, and is 0 at $T_1$ and higher.

The correction weighting function $W_1$ is 0 from a temperature of 0 to $T_L$, rises from 0 to 1 from $T_L$ to $T_1$, decreases from 1 to 0 from $T_1$ to $T_2$, and is 0 at $T_2$ and higher.

The correction weighting function $W_2$ is 0 from a temperature of 0 to $T_1$, rises from 0 to 1 from $T_1$ to $T_2$, decreases from 1 to 0 from $T_2$ to $T_3$, and is 0 at $T_3$ and higher.

The correction weighting function $W_3$ is 0 from a temperature of 0 to $T_2$, rises from 0 to 1 from $T_2$ to $T_3$, decreases from 1 to 0 from $T_4$ to $T_H$, and is 0 at $T_H$ and higher.

The correction weighting function $W_4$ is 0 from a temperature of 0 to $T_3$, rises from 0 to 1 from $T_3$ to $T_H$, and is 1 at $T_H$ and higher.

In addition, herein, the sum of each function $W_i$ is 1 at all temperatures.

Next, operation of the correction coefficient calculation section 342 using the above-mentioned correction weighting function $W_i$ will be explained.

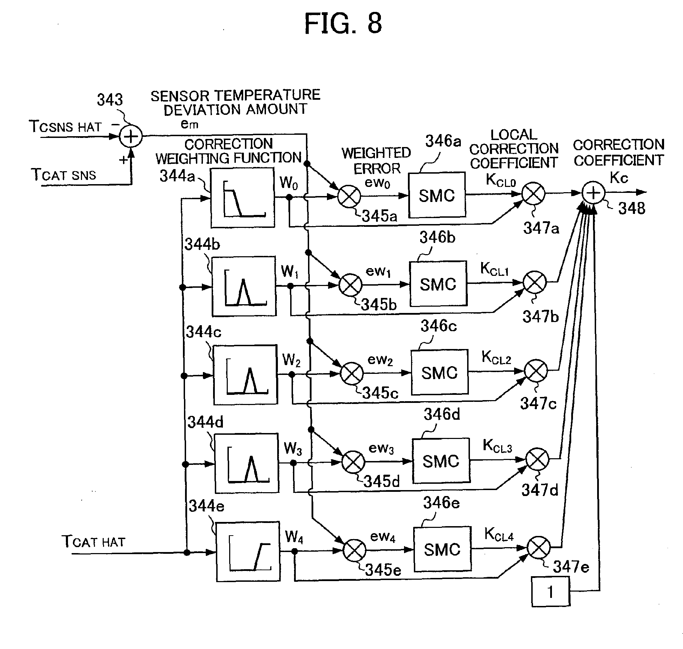

FIG. 8 is a block diagram showing a configuration of the correction coefficient calculation section 342.

First, as shown in the following formula (14), the deviation between the detected temperature $T_{CAT\ SNS}$ output from the catalyst temperature sensor and the output estimated temperature $T_{CSNS\ HAT}$ output from the temperature sensor model is calculated by the adder 343, and this is defined as a sensor temperature deviation amount $em(k)$.

$$em(k) = T_{CAT\ SNS}(k-1) - T_{CSNS\ HAT}(k-1) \qquad (14)$$

Next, the correction weighting functions $W_0$, $W_1$, $W_2$, $W_3$, and $W_4$ are calculated according to the estimated temperature $T_{CAT\ HAT}$, based on the correction weighting function maps 344a, 344b, 344c, 344d, and 344e.

Then, as shown in the following formula (15), the product of each of the correction weighting functions $W_0$ to

$W_4$ and the sensor temperature deviation amount em(k) are calculated by the multipliers 345a, 345b, 345c, 345d, and 345e, and this is defined as weighted errors $ew_0$, $ew_1$, $ew_2$, $ew_3$, and $ew_4$.

$$ew_i(k) = W_i(k)em(k) \qquad (15)$$

Next, local correction coefficients $K_{CL\,0}$, $K_{CL\,1}$, $K_{CL\,2}$, $K_{CL\,3}$, and $K_{CL\,4}$ are calculated by controllers 346a, 346b, 346c, 346d, and 346e. These controllers 346a to 346e calculate the local correction coefficients $K_{CL\,0}$ to $K_{CL\,4}$ as shown in the following formulas (15) to (19) by way of response specifying control, i.e. sliding mode control based on predetermined conversion function setting parameters.

$$K_{CLi}(k) = K_{CL\,NLi}(k) + K_{CL\,RCHi}(k) + K_{CL\,ADPi}(k) \qquad (15)$$

$$K_{CL\,RCHi}(k) = -K_{RCH\,L} \times \sigma_{Li}(k) \qquad (16)$$

$$K_{CL\,NLi}(k) = -K_{NL\,L} \times \mathrm{sign}(\sigma_{Li}(k)) \qquad (17)$$

$$K_{CL\,ADPi}(k) = -K_{ADP\,L} \sum_{j=0}^{k} \sigma_{Li}(j) \qquad (18)$$

$$\sigma_{Li}(k) = ew_i(k) - Sl \times ew_i(k-1) \qquad (19)$$

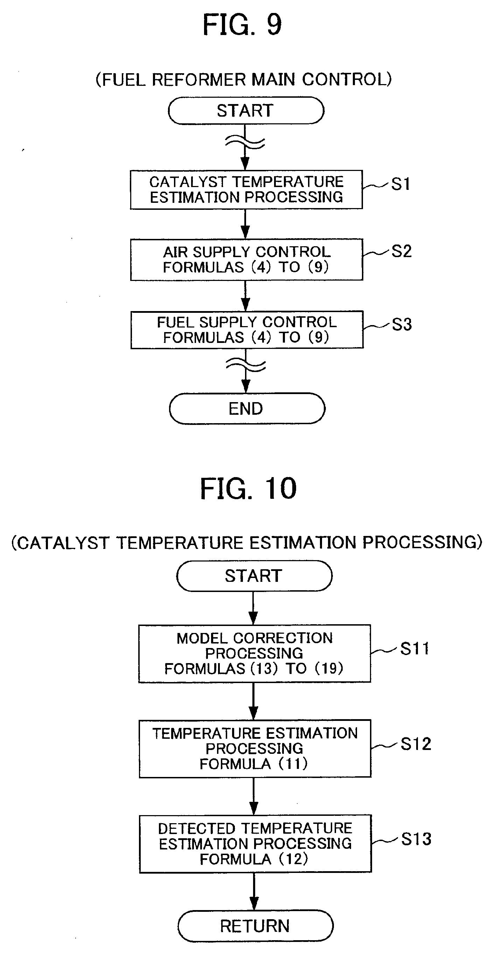

In addition, the coefficients and parameters in formulas (15) to (19) are defined as follows.
$K_{CL\,NLi}$ is an input for restraining the weighted error $ew_i$ on the conversion line.
$K_{CL\,RCHi}$ is an input for placing the weighted error $ew_i$ on the conversion line.
$K_{CL\,ADPi}$ is an input for suppressing the influence of modeling errors and noise, and restraining the weighted error $ew_i$ on the conversion line.
$K_{NL\,L}$ is a non-linear input control gain, $K_{RCH\,L}$ is a reaching law control gain, $K_{ADP\,L}$ is an adaptive law control gain, and each is set to an optimum value based on experimentation so that the weighted error $ew_i$ appears stably on the conversion line.
$\sigma_{Li}$ is a conversion function relating to the weighted error $ew_i$.
S1 is a conversion function setting parameter, and is set to a value larger than -1 and smaller than 0.
Next, as shown in the above-mentioned formula (13), the products of the local correction coefficients $K_{CL\,0}$ to $K_{CL\,4}$ and the local correction coefficients $W_0$ to $W_4$ are calculated by way multipliers 347a, 347b, 347c, 347d, and 347e and an adder 348, and the correction coefficient $K_C$ is calculated by summing these products.
A sequence of control of the fuel reformer will be explained while referring to FIGS. 9 and 10.
FIG. 9 is a flowchart showing a sequence of main control of the fuel reformer by the ECU. It should be noted that, in this flowchart, only a sequence relating to temperature control of the fuel reformer is shown, and sequences for warm up control, shut down control of the fuel reformer, and the like are omitted. In addition, each step is executed in a control cycle of 5 msec, for example.
In the main control of the fuel reformer, first catalyst temperature estimation processing, which is described in detail with reference to FIG. 10 later, is executed in Step 1, and then Step S2 is advanced to.
In Step S2, air supply control is executed. In this step, the air supply amount $G_{AIR\,CMD}$ is calculated based on the above formulas (4) to (9), and is then output to the air supply device of the fuel reformer.
In Step S3, fuel supply control is executed. In this step, the fuel supply amount $G_{FUEL\,CMD}$ is calculated based on the above formulas (4) to (9), and is then output to the fuel supply device of the fuel reformer.
FIG. 1 is a flowchart showing a sequence of catalyst temperature estimation processing.
In Step S11, model correction processing is executed. In this step, the correction coefficient $K_C$ of the catalytic reaction thermal coefficient $C_{CAT}$ of the reforming catalyst is calculated based on the above formulas (13) to (19).

In Step S12, temperature estimation processing is executed. In this step, the estimated temperature $T_{CAT\,HAT}$ of the reforming catalyst is calculated based on the above formula (11).

In Step S13, detected temperature estimation processing is executed. In this step, the output estimated temperature $T_{CSNS}$ of the catalyst temperature sensor is calculated based on the above formula (12).

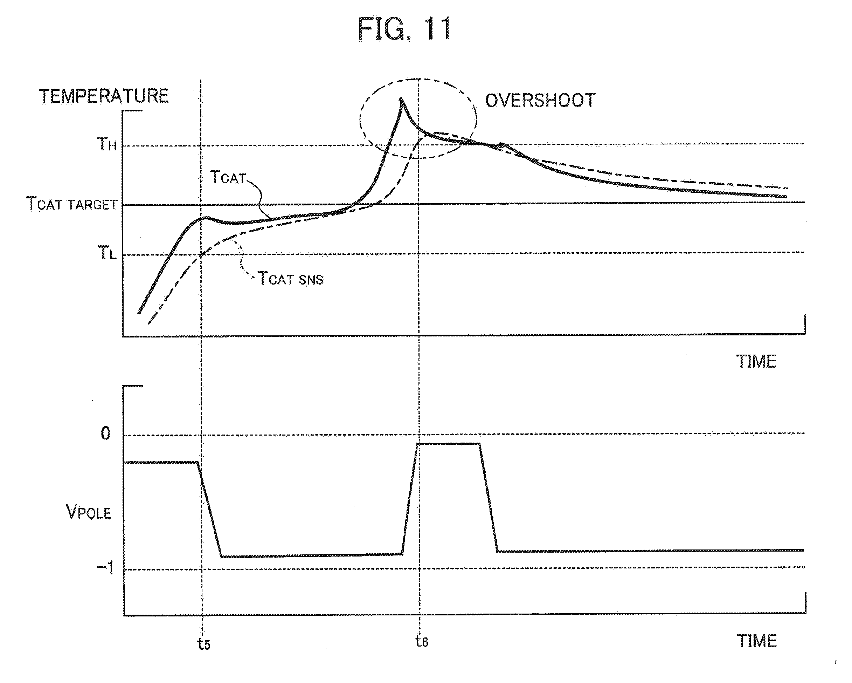

An example of control of the fuel reformer will be explained with reference to FIGS. 11 to 14.

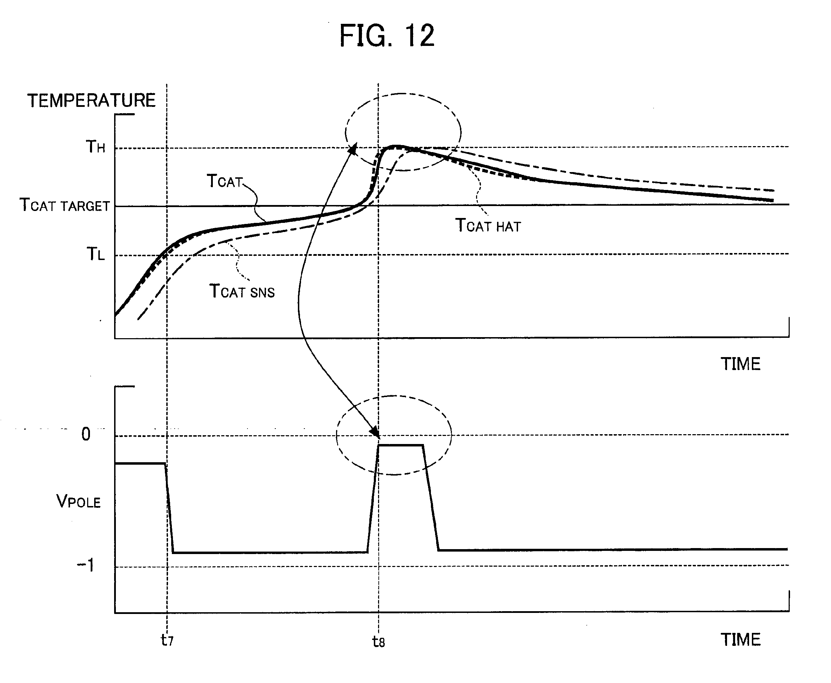

FIGS. 11 and 12 are time charts showing time change of the temperature $T_{CAT}$ of the reforming catalyst and the conversion function setting parameter $V_{POLE}$ of a comparative example and the present embodiment.

Herein, the comparative example of the present embodiment shows control using the detected temperature $T_{CAT\,SNS}$ of the catalyst temperature sensor 21 in place of the estimated temperature $T_{CAT\,HAT}$ of the catalyst temperature estimation section 32 as an input of the controller 30 (refer to FIG. 1).

A time chart of the comparative example will be explained with reference to FIG. 11.

Since the detected temperature $T_{CAT\,SNS}$ is lower than the minimum temperature $T_L$ between the starting time up to the time $t_5$, control is performed to quickly bring the temperature of the reforming catalyst close to the target temperature $T_{CAT\,TARGET}$ by setting the conversion function setting parameter $V_{POLE}$ to a value close to 0.

At the time $t_5$, control is performed to gently bring the temperature of the reforming catalyst close to $T_{CAT\,TARGET}$ by setting the conversion function setting parameter $V_{POLE}$ to a value close to -1, in response to the detected temperature $T_{CAT\,SNS}$ having exceeded the minimum temperature $T_L$.

Thereafter, when the temperature $T_{CAT}$ of the reforming catalyst exceeds the target temperature $T_{CAT\,TARGET}$, the reforming reaction of the reforming catalyst becomes active, and the temperature of the catalyst also suddenly rises with the hydrogen production amount increasing.

In response to the detected temperature $T_{CAT\,SNS}$ at the time $t_6$ having exceeded the maximum temperature $T_H$, control is performed to quickly bring the temperature of the reforming catalyst close to the target temperature $T_{CAT\,TARGET}$ again, by setting the conversion function setting parameter $V_{POLE}$ to a value close to 0.

However, as shown in FIG. 11, the detected temperature $T_{CAT\,SNS}$ of the temperature sensor has a delay compared to the actually catalyst temperature $T_{CAT}$. As a result, even in a case in which the above such sliding mode control has been performed, the actual catalyst temperature $T_{CAT}$ may be higher than the maximum temperature $T_H$ and overshoot, and thus the reforming catalyst may degrade.

A time chart of the present embodiment will be explained while referring to FIG. 12.

Since the estimated temperature $T_{CAT\,HAT}$ is lower than the minimum temperature $T_L$ between the starting time and the time $t_7$, control is performed to quickly bring the temperature of the reforming catalyst close to the target temperature $T_{CAT\,TARGET}$ by setting the conversion function setting parameter $V_{POLE}$ to a value close to 0.

At the time $t_7$, control is performed to gently bring the temperature of the reforming catalyst close to $T_{CAT\,TARGET}$ by setting the conversion function setting parameter $V_{POLE}$ to a value close to -1, in response to the estimated temperature $T_{CAT\,HAT}$ having exceeded the minimum temperature $T_L$.

Thereafter, when the temperature $T_{CAT}$ of the reforming catalyst exceeds the target temperature $T_{CAT\,TARGET}$, the reforming reaction of the reforming catalyst becomes active, and the temperature of the catalyst also suddenly rises with the hydrogen production amount increasing.

In response to the estimated temperature $T_{CAT\,SNS}$ at the time $t_8$ having exceeded the maximum temperature $T_H$, control is performed to quickly bring the temperature of the reforming catalyst close to the target temperature $T_{CAT\,TARGET}$ again, by setting the conversion function setting parameter $V_{POLE}$ to a value close to 0.

With this, the actual catalyst temperature $T_{CAT}$ begins to converge to the target temperature $T_{CAT\,TARGET}$ once more, without overshooting the maximum temperature $T_H$, as shown in FIG. 11.

Specifically, with the present embodiment, it is possible to control the temperature of the reforming catalyst to between the minimum temperature $T_L$ and maximum temperature $T_H$ by controlling the fuel reformer based on the estimated temperature $T_{CAT\,HAT}$, which does not have a delay relative to the actual catalyst temperature $T_{CAT}$.

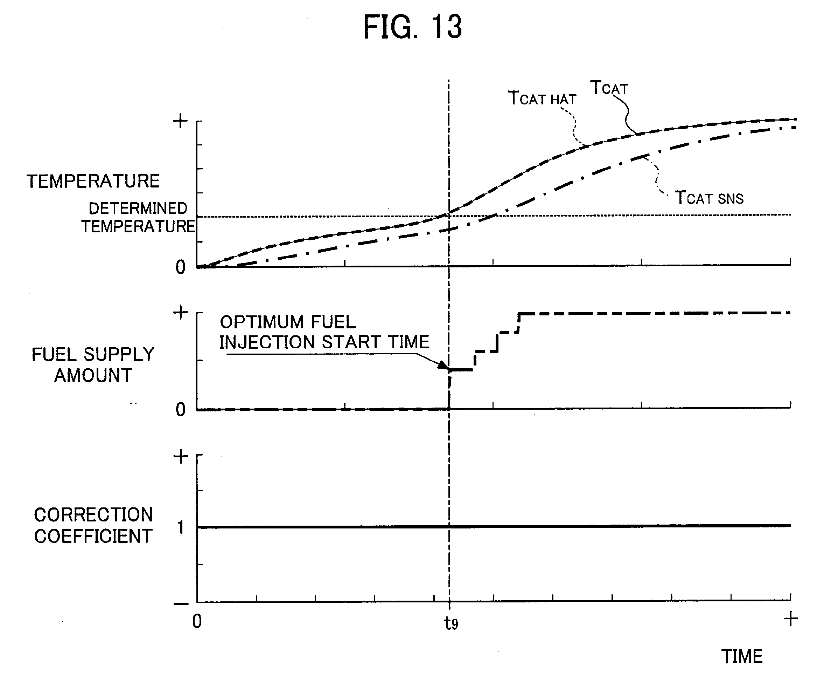

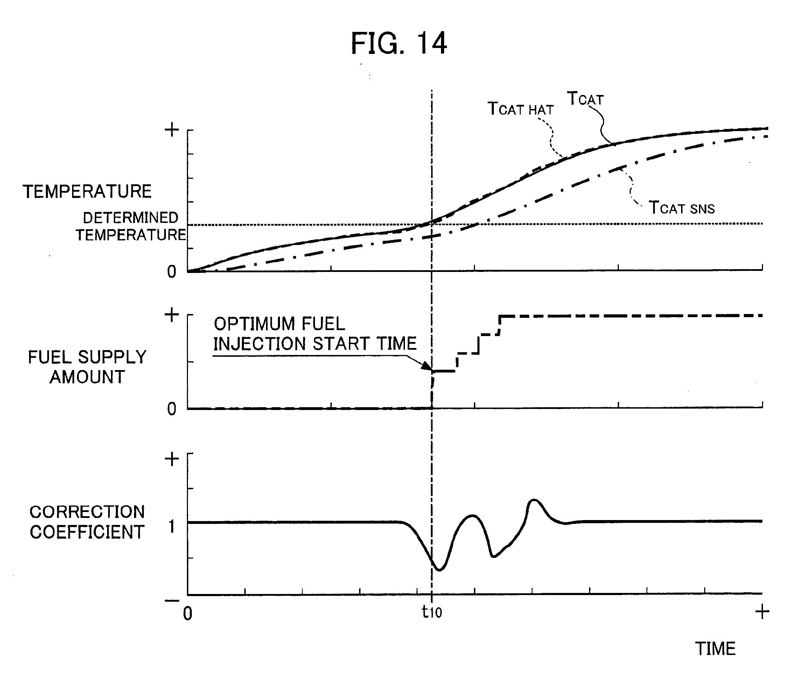

FIGS. 13 and 14 are time charts showing time change of the temperature $T_{CAT}$ of the reforming catalyst, the fuel supply amount $G_{FUEL\,CMD}$, and the correction coefficient $K_C$ prior to degradation and after degradation of the reforming catalyst, respectively.

As shown in FIG. 13, in the state prior to the reforming catalyst degrading, an estimated temperature $T_{CAT\,HAT}$ close to the actually catalyst temperature $T_{CAT}$ can be calculated without correcting the correlation model, i.e. without changing the correction coefficient $K_C$ from 1. This enables the supply of fuel to be started at the optimal fuel start time $t_9$.

In addition, as shown in FIG. 14, even after the reforming catalyst has degraded, an estimated temperature $T_{CAT\,HAT}$ close to the actual catalyst temperature $T_{CAT}$ can be calculated by changing the correction coefficient $K_C$ from 1 and correcting the correlation model. This enables the supply of fuel to be started at the optimal fuel start time $t_{10}$.

Thus far, according to the present embodiment, the catalyst temperature is estimated based on the correlation model, which relates to the temperature of the reforming catalyst 11 and the catalytic reaction thermal coefficient $C_{CAT}$ characterizing the reforming reaction and associates these parameters, and the temperature of the reforming catalyst 11 is controlled based on this estimated temperature $T_{CAT\ HAT}$. In this way, by controlling the temperature of the reforming catalyst 11 based on the estimated temperature $T_{CAT\ HAT}$, which does not have delay relative to the real reforming catalyst temperature $T_{CAT}$, it is possible to control to the target temperature $T_{CAT\ TARGET}$ without overshoot occurring. In particular, since the reforming catalyst 11 may deactivate in a case of overshoot having occurred due to use in a high temperature region close to the heat-resistance limit, it is preferred to avoid overshoot of the temperature as much as possible.

In addition, a model correction section 34 is provided that defines the plurality of correction weighting functions $W_i$ that set the temperature of the reforming catalyst to a domain of definition, calculates a plurality of local correction coefficients $K_{CL\ i}$ that are multiplied by this correction weighting function based on the estimated temperature $T_{CAT\ HAT}$ of the reforming catalyst, and corrects the correlation model based on the plurality of correction weighting functions $W_i$ and local correction coefficients $K_{CL\ i}$.

This enables a temperature close to the real temperature $T_{CAT}$ of the reforming catalyst 11 to be estimated, and thus the reforming catalyst 11 to be controlled to the target temperature $T_{CAT\ TARGET}$ with high precision, even in a case of the correlation model having shifted from the actual behavior of the reforming catalyst 11 due to degradation of the reforming catalyst 11, for example, by correcting the correlation model by way of the model correction section 34. In addition, herein, even in a case in which degradation of the reforming catalyst 11 shows a non-linear characteristic, it is possible to correct the correlation model to match this degradation by introducing the above such plurality of correction weighting functions $W_i$ to correct the correlation model. Therefore, the temperature of the reforming catalyst can be controlled at higher precision.

In addition, according to the present embodiment, the first parameter is set to be the catalyst temperature $T_{CAT}$, and the second parameter is set to be the catalytic reaction thermal coefficient $C_{CAT}$. Even in a case in which the reforming catalyst 11 degrades and the characteristic relating to the catalyst temperature $T_{CAT}$ of the catalytic reaction thermal coefficient $C_{CAT}$ has changed, this enables the correlation model to be corrected taking into account this characteristic change. Therefore, the temperature of the reforming catalyst 11 can be controlled to the target temperature $T_{CAT\ TARGET}$ at even higher precision.

In addition, according to the present embodiment, based on the model of the catalyst temperature sensor 21, the output value of this catalyst temperature sensor 21 is estimated, and the local correction coefficient $K_{CL\ i}$ is calculated so that the deviation em between this estimated temperature $T_{CSNS\ HAT}$ and the detected temperature $T_{CAT\ SNS}$ of the catalyst temperature sensor 21 converges. Incidentally, the deviation em between this estimated temperature $T_{CSNS\ HAT}$ and detected temperature $T_{CAT\ SNS}$ causes degradation of the reforming catalyst. It is possible to suitably correct the correlation model to match the degradation of the reforming catalyst by calculating the local correction coefficients $K_{CL\ i}$ so that this deviation em converges.

In addition, according to the present embodiment, the plurality of local correction coefficients $K_{CL\ i}$ is calculated based on response specifying control. For example, in a case of calculating such a plurality of local correction coefficients $K_{CL\ i}$ simultaneously, there is mutual interference, and cyclically oscillating behavior may be expressed and may diverge. However, by calculating the plurality of local correction coefficients $K_{CL\ i}$ based on response specifying control, it can be calculated stably without inducing such interference.

In addition, according to the present embodiment, a region in which the catalytic reaction thermal coefficient $C_{CAT}$ changes is set as a change region, and the plurality of correction weighting functions $W_i$ change within this change region, and is set so as to intersection with each other within this change region. In other words, by mainly correcting only a region in which the catalytic reaction thermal coefficient $C_{CAT}$ changes, the correlation mode can be precisely corrected without requiring excessive operational load.

In addition, according to the present embodiment, the catalyst temperature of a portion in the reforming catalyst 11 at which the reforming reaction temperature is the highest is detected by the catalyst temperature sensor 21, and the temperature of the reforming catalyst 11 is controlled so that the estimated temperature $T_{CAT\ HAT}$ of the reforming catalyst 11 is lower than a predetermined deactivation temperature $T_H$. This enables degradation, resulting from the reforming catalyst 11 exceeding the deactivation temperature $T_H$, to be prevented.

In addition, according to the present embodiment, by storing the fuel reformer 1 inside the bonnet, which is provided with the internal combustion engine, the temperature of the reforming catalyst 11 can be controlled with higher precision. That is, inside the bonnet, the temperature change is small due to not being greatly influenced by wind and rain. As a result, the estimating precision of the temperature of the reforming catalyst 11 can be further improved.

In addition, according to the present embodiment, the temperature of the reforming catalyst 11 is controlled by sliding mode control based on the predetermined conversion function setting parameter $V_{POLE}$. This enables control to be performed so that the temperature of the reforming catalyst 11 is brought close within a predetermined range, and thus enables the fuel reformer 1 to be operated stably, for example.

In addition, according to the present embodiment, in a case in which the operating state of the fuel reformer 1 is a steady state, the conversion function setting parameter $V_{POLE}$ is set within a range from -1 to 0 to a value closer to -1 than 0. This enables the consumption of excess fuel during warming up to be curbed, in particular, and enables overshoot of the temperature of the reforming catalyst to be suppressed.

In the present embodiment, the ECU 3 configures a temperature estimation means, temperature control means, model correction means, and detected value estimation means. More specifically, the catalyst temperature estimation section 32 of FIG. 1 corresponds to the temperature estimation means, the controller 30 corresponds to the temperature control means, the model correction section 34 corresponds to the model correction means, and the temperature sensor model 341 corresponds to the detected value estimation means.

It should be noted that the present invention is not to be limited to the aforementioned embodiment, and various modifications thereto are possible.

For example, in the aforementioned embodiment, although a temperature sensor was provided that detects the temperature of the heater 15, and the estimated temperature $T_{CAT\ HAT}$ of the reforming catalyst was calculated using the detected temperature $T_{PRE}$ of this temperature sensor; it is not limited thereto. For example, the estimated temperature $T_{CAT\ HAT}$ of the reforming catalyst may be calculated using a temperature $T_{PRE\ HAT}$ estimated by way of a map, instead of the detected temperature $T_{PRE}$ of the temperature sensor of the heater.

In addition, in the aforementioned embodiment, although a correlation model was defined with the first parameter as the temperature $T_{CAT}$ of the reforming catalyst and the second parameter as the catalytic reaction thermal coefficient $C_{CAT}$, it is not limited thereto. For example, the correlation model may be defined using an amount related to the exothermic reaction of the reforming catalyst such as the hydrogen production amount of the reforming catalyst or the inlet temperature of the reforming catalyst, as the second parameter.

In addition, in the aforementioned embodiment, although the local correction coefficients $K_{CL\ 0}$ to $K_{CL\ 4}$ were calculated based on sliding mode control in the controllers 346a to 346e, it is not limited thereto. For example, the local correction coefficients $K_{CL\ 0}$ to $K_{CL\ 4}$ may be calculated based on a method that is conventionally known such as PID control, optimization control, backstepping control, and H-infinity control. Above all, sliding mode control and backstepping control, which can prevent interference of each of the local correction coefficients $K_{CL\ 0}$ to $K_{CL\ 4}$ by causing the weighted error $ew_i$ to exponentially converge, are preferred.

**Claims**

1. A control method for a fuel reformer (1) that controls temperature of a reforming catalyst (11) of the fuel reformer, the method comprising:

   detecting a temperature of the reforming catalyst by a temperature detection means (21);
   estimating with two parameters characterizing a reforming reaction of the reforming catalyst set as a catalyst temperature ($T_{CAT}$) and a catalytic reaction thermal coefficient ($C_{CAT}$) that indicates a heat generation state of a reforming reaction of the reforming catalyst (11), respectively, the catalyst temperature based on a correlation model associating the catalyst temperature ($T_{CAT}$) and the catalytic reaction thermal coefficient ($C_{CAT}$) by a temperature estimation means (32); and
   controlling a temperature of the reforming catalyst based on an estimated temperature ($T_{CAT\ HAT}$) of the temperature estimation means (32) by a temperature control means (30);
   **characterized by**
   defining a plurality of correction weighting functions ($W_0$, $W_1$, $W_2$, $W_3$, $W_4$) that set the catalyst temperature ($T_{CAT}$) to a domain of definition, calculating a plurality of local correction coefficients ($K_{Cl\ 0}$, $K_{Cl\ 1}$, $K_{Cl\ 2}$, $K_{Cl\ 3}$, $K_{Cl\ 4}$) that is multiplied by each of the plurality of correction weighting functions ($W_0$, $W_1$, $W_2$, $W_3$, $W_4$), based on the detected temperature ($T_{CAT\ SNS}$) of the temperature detection means (21) and the estimated temperature ($T_{CAT\ HAT}$) of the temperature estimation means (32), and correcting the correlation model based on the plurality of correction weighting functions ($W_0$, $W_1$, $W_2$, $W_3$, $W_4$) and the plurality of local correction coefficients ($K_{Cl\ 0}$, $K_{Cl\ 1}$, $K_{Cl\ 2}$, $K_{Cl\ 3}$, $K_{Cl\ 4}$) by a model correction means (34).

2. A control method for a fuel reformer (1) according to claim 1, further comprising: estimating an output value of the temperature detection means (21) in accordance with the estimated temperature ($T_{CAT\ HAT}$) of the temperature estimation means (32), based on a model of the temperature detection means (21) by a detected value estimation means (341),
   wherein the model correction means (34) calculates the plurality of local correction coefficients ($K_{Cl\ 0}$, $K_{Cl\ 1}$, $K_{Cl\ 2}$, $K_{Cl\ 3}$, $K_{Cl\ 4}$) so that deviation (em) between the detected temperature ($T_{CAT\ SNS}$) of the temperature detection means (21) and the estimated temperature ($T_{CAT\ HAT}$) of the detected value estimation means (341) converges.

3. A control method for a fuel reformer (1) according to claim 2, wherein the model correction means (34) calculates the plurality of local correction coefficients ($K_{Cl\ 0}$, $K_{Cl\ 1}$, $K_{Cl\ 2}$, $K_{Cl\ 3}$, $K_{Cl\ 4}$) based on response specifying control.

**4.** A control method for a fuel reformer (1) according to any one of claims 1 to 3,
wherein, in a case of having set, in the correlation model, the catalyst temperature ($T_{CAT}$) to a domain of definition, the catalytic reaction thermal coefficient ($C_{CAT}$) to a range of value, and a region in which the catalytic reaction thermal coefficient ($C_{CAT}$) changes for the catalyst temperature ($T_{CAT}$) to a change region,
the plurality of correction weighting functions ($W_0$, $W_1$, $W_2$, $W_3$, $W_4$) is each a function that changes within the change region, and is set so as to intersect each other within the change region.

**5.** A control method for a fuel reformer (1) according to any one of claims 1 to 4,
wherein the temperature detection means (21) detects a catalyst temperature of a portion of the reforming catalyst (11) at which the reforming reaction temperature is the highest, and
wherein the temperature control (30) means controls the temperature of the reforming catalyst (11) so that the estimated temperature ($T_{CAT\ HAT}$) of the temperature estimation means (32) is lower than a predetermined deactivation temperature ($T_{CAT\ H}$) of the reforming catalyst (11).

**6.** A control method for a fuel reformer (1) according to any one of claims 1 to 5.
wherein the fuel reformer (1) is equipped in a vehicle provided with an internal combustion engine, and
wherein the reforming reaction of the reforming catalyst (11) is an exothermic reaction.

**7.** A control method for a fuel reformer (1) according to any one of claims 1 to 6,
wherein the temperature control means (30) controls the temperature of the reforming catalyst (11) by sliding mode control based on a predetermined conversion function setting parameter ($V_{POLE}$).

**8.** A control method for a fuel reformer (1) according to claim 7, wherein the conversion function setting parameter ($V_{POLE}$) is set within a range of -1 to 0 to a value closer to -1 than 0, in a case in which an operating state of the fuel reformer (1) is in a steady state.

**Patentansprüche**

**1.** Steuerverfahren für einen Brennstoffreformer (1), das eine Temperatur eines Reformerkatalysators (11) des Brennstoffreformers steuert/regelt, wobei das Verfahren aufweist:

Erfassen einer Temperatur des Reformerkatalysators mit einem Temperaturerfassungsmittel (21);
Schätzen, mit zwei eine Reformerreaktion des Reformerkatalysators kennzeichnenden Parametern, die jeweils als Katalysatortemperatur ($T_{CAT}$) und als thermischer Katalysatorreaktionskoeffizient ($C_{CAT}$), der einen Wärmeerzeugungszustand einer Reformerreaktion des Reformerkatalysators (11) angibt, gesetzt sind, der Katalysatortemperatur basierend auf einem Korrelationsmodell, das die Katalysatortemperatur ($T_{CAT}$) und den thermischen Katalysatorreaktionskoeffizienten ($C_{CAT}$) zuordnet, mit einem Temperaturschätzmittel (32), und
Steuern/Regeln einer Temperatur des Reformerkatalysators basierend auf einer geschätzten Temperatur ($T_{CAT\ HAT}$) des Temperaturschätzmittels (32) durch ein Temperatursteuermittel (30),
**gekennzeichnet durch**
Definieren einer Mehrzahl von Temperaturgewichtungsfunktionen ($W_0$, $W_1$, $W_2$, $W_3$, $W_4$), die die Katalysatortemperatur ($T_{CAT}$) auf eine Definitionsdomäne setzen, Berechnen einer Mehrzahl von örtlichen Korrekturkoeffizienten ($K_{Cl\ 0}$, $K_{Cl\ 1}$, $K_{Cl\ 2}$, $K_{Cl\ 3}$, $K_{Cl\ 4}$), die mit jedem der Mehrzahl von Korrekturgewichtungsfunktionen ($W_0$, $W_1$, $W_2$, $W_3$, $W_4$) multipliziert wird, basierend auf der erfassten Temperatur ($T_{CAT\ SNS}$) des Temperaturerfassungsmittels (21) und der geschätzten Temperatur ($T_{CAT\ HAT}$) des Temperaturschätzmittels (32), und Korrigieren des Korrelationsmodells basierend auf der Mehrzahl von Korrekturgewichtungsfunktionen ($W_0$, $W_1$, $W_2$, $W_3$, $W_4$) und der Mehrzahl von örtlichen Korrekturkoeffizienten ($K_{Cl\ 0}$, $K_{Cl\ 1}$, $K_{Cl\ 2}$, $K_{Cl\ 3}$, $K_{Cl\ 4}$) mit einem Modellkorrekturmittel (34).

**2.** Steuerverfahren für einen Brennstoffreformer (1) nach Anspruch 1, das ferner aufweist:

Schätzen eines Ausgangswerts des Temperaturerfassungsmittels (21) gemäß der geschätzten Temperatur ($T_{CAT\ HAT}$) des Temperaturschätzmittels (32), basierend auf einem Modell des Temperaturerfassungsmittels (21) durch ein Erfassungswertschätzmittel (341);
wobei das Modellkorrekturmittel (34) die Mehrzahl von örtlichen Korrekturkoeffizienten ($K_{Cl\ 0}$, $K_{Cl\ 1}$, $K_{Cl\ 2}$, $K_{Cl\ 3}$, $K_{Cl\ 4}$) derart berechnet, dass eine Abweichung (em) zwischen der erfassten Temperatur ($T_{CAT\ SNS}$) des Temperaturerfassungsmittels (21) und der geschätzten Temperatur ($T_{CAT\ HAT}$) des Erfassungswertschätzmittels (341) konvergiert.

**3.** Steuerverfahren für ein Brennstoffreformer (1) nach Anspruch 2, wobei das Modellkorrekturmittel (34) die Mehrzahl von örtlichen Korrekturkoeffizienten ($K_{CI\,0}$, $K_{CI\,1}$, $K_{CI\,2}$, $K_{CI\,3}$, $K_{CI\,4}$) basierend auf einer reaktionsspezifizierenden Regelung berechnet.

**4.** Steuerverfahren für einen Brennstoffreformer (1) nach einem der Ansprüche 1 bis 3,
wobei in einem Fall, wo in dem Korrelationsmodell die Katalysatortemperatur ($T_{CAT}$) auf eine Definitionsdomäne, der thermische Katalysatorreaktionskoeffizient ($T_{CAT}$) auf einen Wertebereich, und der Bereich, in dem sich der thermische Katalysatorreaktionskoeffizient ($T_{CAT}$) für die Katalysatortemperatur ($T_{CAT}$) ändert, auf einen Änderungsbereich gesetzt worden sind,
die Mehrzahl von Korrekturgewichtungsfunktionen ($W_0$, $W_1$, $W_2$, $W_3$, $W_4$) jeweils eine Funktion hat, die sich innerhalb des Änderungsbereichs ändert, und so gesetzt wird, dass sie sich in dem Änderungsbereich einander überschneiden.

**5.** Steuerverfahren für ein Brennstoffreformer (1) nach einem der Ansprüche 1 bis 4,
wobei das Temperaturerfassungsmittel (21) eine Katalysatortemperatur eines Abschnitts des Reformerkatalysators (11) erfasst, an dem die Reformerreaktionstemperatur am höchsten ist, und
wobei das Temperatursteuermittel (30) die Temperatur des Reformerkatalysators (11) derart steuert/regelt, dass die geschätzte Temperatur ($T_{CAT\,HAT}$) des Temperaturschätzmittels (32) niedriger als eine vorbestimmte Deaktivierungstemperatur ($T_{CAT\,H}$) des Reformerkatalysators (11) ist.

**6.** Steuerverfahren für einen Brennstoffreformer (1) nach einem der Ansprüche 1 bis 5,
wobei der Brennstoffreformer (1) in einem mit einem Verbrennungsmotor versehenen Fahrzeug angebracht ist, und
wobei die Reformerreaktion des Reformerkatalysators (11) eine exotherme Reaktion ist.

**7.** Steuerverfahren für einen Brennstoffreformer nach einem der Ansprüche 1 bis 6,
wobei das Temperatursteuermittel (30) die Temperatur des Reformerkatalysators (11) durch eine Gleitmodusregelung basierend auf einem vorbestimmten Konversionsfunktionssetzparameter ($V_{POLE}$) regelt.

**8.** Steuerverfahren für einen Brennstoffreformer (1) nach Anspruch 7, wobei der Konversionsfunktionssetzparameter ($V_{POLE}$) in einem Bereich von -1 bis 0 auf einen Wert näher als -1 als 0 gesetzt wird, in einem Fall, in dem ein Betriebszustand des Brennstoffreformers (1) ein Dauerzustand ist.

**Revendications**

**1.** Un procédé de commande pour un reformeur de carburant (1) qui commande la température d'un catalyseur de reformage (11) du reformeur de carburant, le procédé comprenant :

la détection d'une température du catalyseur de reformage par des moyens de détection de la température (21) ;
l'estimation avec deux paramètres caractérisant une réaction de reformage du catalyseur de reformage réglés comme une température de catalyseur ($T_{CAT}$) et un coefficient thermique de réaction catalytique ($C_{CAT}$) qui indique respectivement un état de production de chaleur d'une réaction de reformage du catalyseur de reformage (11), la température du catalyseur basée sur un modèle de corrélation associant la température du catalyseur ($T_{CAT}$) et le coefficient thermique de réaction catalytique ($C_{CAT}$) par des moyens d'estimation de la température (32) ; et
la commande d'une température du catalyseur de reformage basée sur une température estimée ($T_{CAT\,HAT}$) des moyens d'estimation de la température (32) par des moyens de commande de la température (30) ;
**caractérisé par**
la définition de plusieurs fonctions de pondération de correction ($W_0$, $W_1$, $W_2$, $W_3$, $W_4$) qui règlent la température du catalyseur ($T_{CAT}$) dans un domaine de définition en calculant plusieurs coefficients de correction locale ($K_{CI\,0}$, $K_{CI\,1}$, $K_{CI\,2}$, $K_{CI\,3}$, $K_{CI\,4}$) qui sont multipliés par chacune des plusieurs fonctions de pondération de correction ($W_0$, $W_1$, $W_2$, $W_3$, $W_4$) sur la base de la température détectée ($T_{CAT\,SNS}$) des moyens de détection de la température (21) et de la température estimée ($T_{CAT\,HAT}$) des moyens d'estimation de la température (32) et la correction du modèle de corrélation sur la base de plusieurs fonctions de pondération de correction ($W_0$, $W_1$, $W_2$, $W_3$, $W_4$) et plusieurs coefficients de correction locale ($K_{CI\,0}$, $K_{CI\,1}$, $K_{CI\,2}$, $K_{CI\,3}$, $K_{CI\,4}$) par des moyens de correction du modèle (34).

**2.** Un procédé de commande pour un reformeur de carburant (1) selon la revendication 1 comprenant par ailleurs: l'estimation d'une valeur de sortie des moyens de détection de la température (21) conformément à la température estimée ($T_{CAT\ HAT}$) des moyens d'estimation de la température (32) sur la base d'un modèle des moyens de détection de la température (21) par des moyens d'estimations de la valeur détectée (341),

dans lequel les moyens de correction du modèle (34) calculent les plusieurs coefficients de correction locale ($K_{CI\ 0}$, $K_{CI\ 1}$, $K_{CI\ 2}$, $K_{CI\ 3}$, $K_{CI\ 4}$), de telle sorte que l'écart (em) entre la température détectée ($T_{CAT\ SNS}$) des moyens de détection de la température (21) et la température estimée ($T_{CAT\ HAT}$) des moyens d'estimation de la valeur détectée (341) converge.

**3.** Un procédé de commande d'un reformeur de carburant (1) selon la revendication 2, dans lequel les moyens de correction du modèle (34) calculent les plusieurs coefficients de correction locale ($K_{CI\ 0}$, $K_{CI\ 1}$, $K_{CI\ 2}$, $K_{CI\ 3}$, $K_{CI\ 4}$), sur la base d'une commande spécifiant la réponse.

**4.** Un procédé de commande pour un reformeur de carburant (1) selon l'une des revendications 1 à 3,

dans lequel, dans le cas du réglage, dans le modèle de corrélation, de la température du catalyseur ($T_{CAT}$) dans un domaine de définition, coefficient thermique de la réaction catalytique ($C_{CAT}$) dans une gamme de valeur et une région dans laquelle le coefficient thermique de la réaction catalytique ($C_{CAT}$) varie pour la température du catalyseur dans une région de variation,

les plusieurs fonctions de pondération de correction ($W_0$, $W_1$, $W_2$, $W_3$, $W_4$) étant chacune une fonction qui varie dans la région de variation et étant réglées de manière à se croiser l'une l'autre dans la région de variation.

**5.** Un procédé de commande pour un reformeur de carburant (1) selon l'une des revendications 1 à 4,

dans lequel les moyens de détection de la température (21) détectent une température de catalyseur d'une partie du catalyseur de reformage (11) à laquelle la température de la réaction de reformage est la plus élevée et

dans lequel les moyens de commande de la température (30) commandent la température du catalyseur de reformage (11) de telle sorte que la température estimée ($T_{CAT\ HAT}$) des moyens d'estimation de la température (32) soit inférieure à une température de désactivation ($T_{CAT\ H}$) préalablement déterminée du catalyseur de reformage (11).

**6.** Un procédé de commande pour un reformeur de carburant (1) selon l'une des revendications 1 à 5,

dans lequel le reformeur de carburant (1) est installé dans un véhicule doté d'un moteur à combustion interne, et dans lequel la réaction de reformage du catalyseur de reformage (11) est une réaction exothermique.

**7.** Un procédé de commande pour un reformeur de carburant (1) selon l'une des revendications 1 à 6,

dans lequel les moyens de commande de la température (30) commandent la température du catalyseur de reformage (11) par commande à mode glissant sur la base d'un paramètre de réglage de la fonction de conversion préalablement déterminé ($V_{POLE}$).

**8.** Un procédé de commande pour un reformeur de carburant (1) selon la revendication 7, dans lequel le paramètre de réglage de la fonction de conversion ($V_{POLE}$) est réglé dans une gamme de -1 à 0 à une valeur plus proche de -1 que de 0 dans le cas où un état opératoire du reformeur de carburant (1) est en régime constant.

# FIG. 1

# FIG. 2

EP 2 246 294 B1

# FIG. 3

$e(k)$

CONVERSION LINE
$\sigma(k)=0$

$e(k-1)$

# FIG. 4

$-V_{POLE}$

$V_{POLE}=-1$

1

0

CONVERGENCE TIME

# FIG. 5

ESTIMATED TEMPERATURE Tcat hat

# FIG. 6

CATALYTIC REACTION THERMAL COEFFICIENT $C_{CAT}$

6a BEFORE DEGRADATION

6b AFTER DEGRADATION

$T_L$    $T_H$

CATALYST TEMPERATURE $T_{CAT}$
(ESTIMATED TEMPERATURE $T_{CAT\,HAT}$)

# FIG. 7

CORRECTION WEIGHTING FUNCTION $W_i$

$T_L$  $T_1$  $T_2$  $T_3$  $T_H$

CATALYST TEMPERATURE $T_{CAT}$
(ESTIMATED TEMPERATURE $T_{CAT\,HAT}$)

| | |
|---|---|
| ------ | $W_0$ |
| ———— | $W_1$ |
| -----.--- | $W_2$ |
| — — | $W_3$ |
| ■ ■ ■ ■ | $W_4$ |

# FIG. 8

# FIG. 9

(FUEL REFORMER MAIN CONTROL)

START

CATALYST TEMPERATURE
ESTIMATION PROCESSING — S1

AIR SUPPLY CONTROL
FORMULAS (4) TO (9) — S2

FUEL SUPPLY CONTROL
FORMULAS (4) TO (9) — S3

END

# FIG. 10

(CATALYST TEMPERATURE ESTIMATION PROCESSING)

START

MODEL CORRECTION
PROCESSING
FORMULAS (13) TO (19) — S11

TEMPERATURE ESTIMATION
PROCESSING
FORMULA (11) — S12

DETECTED TEMPERATURE
ESTIMATION PROCESSING
FORMULA (12) — S13

RETURN

# FIG. 11

# FIG. 12

EP 2 246 294 B1

# FIG. 13

TEMPERATURE

DETERMINED
TEMPERATURE

$T_{CAT\ HAT}$  $T_{CAT}$

$T_{CAT\ SNS}$

FUEL SUPPLY
AMOUNT

OPTIMUM FUEL
INJECTION START TIME

CORRECTION
COEFFICIENT

0  $t_9$  +

TIME

EP 2 246 294 B1

# FIG. 14

EP 2 246 294 B1

# FIG. 15

130

CONTROLLER

G<sub>FUEL CMD</sub>

← 103

T<sub>CAT SNS</sub>

G<sub>AIR CMD</sub>

121

← 101

FUEL GAS ⇨    ⇨ REFORMED GAS

111

## FIG. 16

TEMPERATURE

DETERMINED TEMPERATURE

16a T$_{CAT}$

16b T$_{CAT\ SNS}$

LAG

FUEL SUPPLY AMOUNT

OPTIMUM FUEL INJECTION START TIME

$t_1$   $t_2$

TIME

# FIG. 17

203

230

CONTROLLER

G_FUEL CMD

G_AIR CMD

201

FUEL GAS

REFORMED GAS

T_PRE

215   211

232

CATALYST TEMPERATURE ESTIMATION SECTION

T_CAT HAT

# FIG. 18

TEMPERATURE

18b T_CAT HAT

18a T_CAT

DETERMINED
TEMPERATURE

FUEL SUPPLY
AMOUNT

OPTIMUM FUEL
INJECTION START TIME

$t_3$

TIME

# FIG. 19

**EP 2 246 294 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200270873 A
- JP 2006183645 A
- US 5857163 A
- US 5544639 A
- JP 2002121002 A